# EUROPEAN PATENT SPECIFICATION

(11) **EP 4 575 812 B1**
(45) Date of publication and mention of the grant of the patent: **27.05.2026**
(21) Application number: 23220019.6
(22) Date of filing: 22.12.2023
(51) Int. Cl.: G06F 12/0866, G06F 12/0875, G06F 12/0895, G06F 12/14

(54) **DATA-TASK ISOLATION, ENCRYPTION AND ACCESS CONTROL IN OBJECT-BASED COMPUTING DEVICE**
DATENTASKISOLIERUNG, VERSCHLÜSSELUNG UND ZUGANGSSTEUERUNG IN OBJEKTBASIERTER RECHNERVORRICHTUNG
ISOLATION DE TÂCHES DE DONNÉES, CHIFFREMENT ET CONTRÔLE D'ACCÈS DANS UN DISPOSITIF INFORMATIQUE BASÉ SUR DES OBJETS

(43) Date of publication of application: 25.06.2025
(73) Proprietor: Imec VZW, 3001 Leuven (BE)
(72) Inventor: MEJDRICH, Eric, 3001 Heverlee (BE); SENGUPTA, Sourav, 3000 Leuven (BE); NACKAERTS, Axel, 3053 Haasrode (BE)
(74) Representative: Winger

(56) References cited:
- US-A1- 2003 187 935

## Description

### Field of the invention

The present invention relates to the field of computer security in object-based computer memory architectures, in particular to access control and protection of data in distributed computer memory for high performance computing (HPC).

### Background of the invention

Known file systems like FAT or NFTS support access control over data that is accessed on a per-file basis on a secondary computer storage medium like hard disk drive. Access list tables are associated with the each one of the files, managed and stored by the file system. Access entries in the access list tables define the owner and user group privileges with respect to the file, as well as the process that are allowed to access the file. It is still the responsibility of the operating system to check and enforce these access rights. Once parts of the file have been moved into main memory, the data is no longer protected by the access control mechanisms of the file system. Moreover, the access list tables themselves have to be stored and manipulated in a secure way.

Most CPU architectures provide additional protection by allowing processes to run at different privilege levels, also referred to as security rings of the processor, e.g. CPU kernel mode for the operating system and CPU user mode for application code. Data protection is also enforceable through the memory management unit, which is under the control of the operating system, by separating processes and restricting memory access to page table entries in accordance with the CPU's current security ring configuration. However, processes that run with elevated privileges may still be able to gain access to data stored in computer memory. Moreover, processes have to issue system calls for tasks that require enhanced privileges, e.g. page allocation, which frequently interrupts the CPU and leads to a waste of compute cycles. The problem is exacerbated in multicore, multi-node machines, where the orchestration and synchronization related to memory access control becomes extremely complex, as each node runs its own operating system.

US 2003/187935 A1 deals with determining whether to cache a fragment object in an object cache.

It is desirable to provide methods and devices for controlling the way computer tasks are allowed to access portions of the computer main memory, in a manner that is easily scalable and without relying on the intervention of an operating system.

### Summary of the invention

The invention is set out in the appended set of claims. The dependent claims set out particular embodiments.

It is an object of embodiments of the present invention to prevent tasks from gaining access to memory objects on the distributed main memory of the computer to which they have no rights, without the intervention of an operating system.

The above objective is accomplished by a device and method according to the present invention.

In one aspect, the present invention relates to an object-based compute node for a multi-node multiprocessing computer. The compute node comprises at least one compute core, an object management unit, and an object cache interposed between the at least one compute core and the object management unit. The at least one compute core is configured for executing tasks that require fragments of one or more memory objects as inputs. Each task is encapsulated in a task object as particular type of memory object, and a unique task object identifier, TOID, is assigned each task object. Tasks belonging to a same task object receive the same task object identifier. Moreover, each memory object is composed of a plurality of fragments that are accessible on a distributed store being the main memory for the compute node, and a unique object identifier, OID, is assigned to each memory object. The at least one compute core is configured to access the fragments of each memory object through offsets in a contiguous logical address space associated with the memory object. The object management unit is configured for mapping the logical addresses of memory object fragments to physical addresses of storage locations within the distributed store, by calculating the physical address for each memory object fragment from a combination of the corresponding object identifier and fragment offset within the logical address space associated with the memory object. The object cache comprises an object cache controller, a plurality of cache lines for holding the memory object fragments to be accessed by the at least one compute core, and a cache tag memory for storing a first and second identification tag for each cache line. The first and second identification tag for each cache line represent the task object identifier of a task that has been scheduled for execution by the at least one compute core and the object identifier of the memory object which is an input to the task that has been scheduled for execution by the at least one compute core, respectively. Hence, the first and second identification tag are used to assign each cache line to a specific combination of task object identifier and memory object identifier, wherein the memory object referred to by the memory object identifier is an input to the scheduled task referred to be the task object identifier. Furthermore, the object cache controller is configured to verify a first correspondence between the task object identifier of a task that is executed on the at least one compute core and one of the first identification tags stored in the cache tag memory and verify a second correspondence between the object identifier of a memory object which is an input to the task that is executed on the at least one compute core and one of the second identification tags stored in the cache tag memory. The cache controller grants access to one of the cache lines only if the verifications of the first and second correspondence have been successful for that cache line.

According to some embodiments of the invention, the compute node comprises a runtime management unit configured to schedule the tasks for execution on the at least one compute node. The runtime management unit may be configured to allocate an identification tag to each memory object that is an input to one of the scheduled tasks. A task that is executed on the at least one compute core corresponds to one of the previously scheduled tasks, which has been cleared for execution on the at least one compute core.

According to some embodiments of the invention, the compute node further comprises an object storage firewall that is operatively coupled between the object cache and the object management unit, such that the object storage firewall can intercept memory access requests from the object cache controller. Moreover, each cache line of the object cache may be configured to store access control bits with respect to different types of access to memory objects, such as read or write access. The object cache controller is further configured to issue requests for memory object fragments in the event of a cache miss, and each request includes the fragment offset, the access control bits for the cache line where the cache miss occurred, as well as the task object identifier and the memory object identifier combination to which that cache line has been assigned. The object storage firewall is further configured to determine the type of access, based on the information included in the request from the object cache controller, and verify that the type of access agrees with a value of the corresponding access control bit, i.e. corresponding to the determined type of access, which access control bit is also included in the request from the object cache controller. The object storage firewall is configured to generate an error message if no agreement between the type of access agrees and the value of the access control bit is established. This error message denies access to the memory object identified by the object identifier included in the request from the object cache controller by the task identified by the task object identifier included in the request from the object cache controller. The object storage firewall is thus configured to enforce pre-granted access rights for memory accesses to a specific memory object by a task at execution time on a hardware level. The pre-granted access rights can be stored in the access control bits of the object cache and may be correctly set by the object storage firewall upon first access to a cache line to which this specific combination of memory object identifier and task object identifier has been assigned.

According to some embodiments of the invention, the access permissions for a memory object (resource) that are given to tasks that belong to a particular access group are embedded in the metadata portion of the memory object.

According to some embodiments of the invention, the object storage firewall further comprises an access lookup table for storing object identifiers in conjunction with a first set of security attributes and storing task object identifiers in conjunction with a second set of security attributes. The lookup table thus stores a respective first set of security attributes for each object identifier and a respective second set of security attributes for each task object identifier. Each of said first and second set of security attributes defines access permissions for at least one access group and each memory object contains a metadata portion that stores access permissions with respect to the at least one access group. The object storage firewall is further configured to retrieve the first and second set of security attributes from the access lookup table, based on the task object identifiers and the object identifier that are included in the request from the object cache controller. If a retrieval is successful, the object storage firewall is configured to compare access permissions defined by the first set of security attributes to access permissions defined by the second set of security attributes, and update the access control bits of the cache line targeted by the request if the access permissions defined by the first set of security attributes corresponds to the access permission defined by the second set of security attributes. The object storage firewall is configured to send a read request for memory object metadata to the object management unit if the retrieval of either one or both of the first and second set of security attributes from the access lookup table is unsuccessful. The read request for memory object metadata includes the task object identifiers and the object identifier.

In another aspect, the present invention relates to an object-based compute node for a multi-node multiprocessing computer. The compute node comprises at least one compute core, an object management unit, and a security management unit. Each memory object is composed of a plurality of fragments that are accessible on a distributed store being the main memory for the compute node, and a unique object identifier, OID, is assigned to each memory object. The at least one compute core is configured to access the fragments of each memory object through offsets in a contiguous logical address space associated with the memory object. The object management unit is configured for mapping the logical addresses of memory object fragments to physical addresses of storage locations within the distributed store, by calculating the physical address for each memory object fragment from a combination of the corresponding object identifier and fragment offset within the logical address space associated with the memory object. The security management unit is configured for encrypting and decrypting memory object fragments exchanged between the compute node and the distributed store, using a secure key stored in a key table of the security management unit. The metadata portion of each memory object contains a key reference to one of the secure keys stored in the key table of the security management unit and the security management unit is configured to select a secure key from the key table, based on the key reference contained in the metadata portion of the memory objects.

The present invention also relates to a cluster computer that comprises a global main memory and a plurality of compute nodes according to embodiments of any one or both of the preceding aspects. The plurality of compute nodes are operatively connected to each other through a communication network and are connected to the global main memory through the communication network too. The global main memory corresponds to the distributed store.

In another aspect, the present invention relates to a method of isolating data from tasks when operating the compute node in accordance with embodiments of any one of the previous aspects. The method comprising the steps of:
scheduling a plurality of tasks for execution by the at least one compute core, each task being encapsulated in a task object as particular type of memory object and requiring fragments of one or more memory objects as inputs and each memory object being composed of a plurality of fragments accessible on a distributed store, wherein storage locations within the distributed store are referenced by physical addresses, and the at least one compute core is configured to access the fragments of each memory object through offsets in a contiguous logical address space associated with the memory object;
assigning a unique task object identifier 'TOID' to each task scheduled for execution and assigning a unique object identifier 'OID' to each memory object required as input to one of the tasks scheduled for execution;
marking cache lines of the object cache with first and second identification tags in the cache tag memory of the object cache, thus obtaining tagged cache lines, the first identification tag and the second identification tag for each tagged cache line representing the task object identifier 'TOID' of a specific task of the tasks scheduled for execution and the object identifier 'OID' of one of the memory objects which is input to said specific task, respectively;
executing, on the at least one compute core, a task of said plurality of tasks scheduled for execution;
verifying a first correspondence between the task object identifier 'TOID' of the task being executed on the at least one compute core and one of said first identification tags stored in the cache tag memory of the object cache;
verifying a second correspondence between the object identifier 'OID' of the memory object which is input to the task being executed on the at least one compute core and one of said second identification tags stored in the cache tag memory;
granting access to a cache line of the object cache provided that the steps of verifying the first and second correspondence has been successful for that cache line.

It is an advantage of embodiments of the invention that memory management based on memory object is immune to branch-mispredictions attacks (e.g. Meltdown, Spectre), since access to the global computer main memory is always occurring within memory objects, thereby avoiding cross-object data pollution.

It is an advantage of embodiments of the invention that different types of memory objects and/or different parts of memory objects can be encrypted in different ways, such as in accordance with different encryption standards.

It is an advantage of embodiments of the invention that secure digital keys for encryption and decryption of memory object contents and/or messages exchanged between nodes (compute nodes, storage nodes) of the cluster computer are stored in a secure location of the compute node and do not leave this secure location during operation.

It is an advantage of embodiments of the invention that no operating system has to intervene in the control of access permissions of memory resources. It is a further advantage that security attributes and/or references to digital keys for encryption or decryption of the memory object contents can be directly embedded into a metadata chunk of the memory object. This facilitates cluster-wide availability of the security attributes and/or key references without a large communication overhead or complex synchronization of access privileges in a multicore, multi-node environment as typically encountered in powerful cluster computers.

It is an advantage of embodiments of the invention that read/write access rights to memory objects on the distributed store are strictly enforced by hardware mechanisms.

It is an advantage of embodiments of the invention that each memory object in its metadata structure the access rights for its owner-task and several access groups. In the context of distributed computing this implies that there is no need to formally distributed the access rights to all the compute nodes of the machine.

It is an advantage of embodiments of the invention that task separation is achieved at the compute core level.

It is an advantage of some embodiments of the invention that the access rights pertaining to specific memory objects are made available to the object storage firewall before a first miss occurs in the object cache with respect to that memory object.

It is an advantage of some embodiments of the invention that default access rights can be given to memory object which enforce the immutable character of these memory objects: only the owner task can read/write, and all other tasks that spawned from the same user top-level task can only read from the memory object.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates the representation of a memory object from the perspective of the at least one compute core of a compute node in accordance with embodiments of the invention.
FIG. 2 illustrates how the memory object of FIG. 1 is stored in multiple locations of a distributed store to which a compute node in accordance with embodiments of the invention is coupled.
FIG. 3 explains how the memory object management unit achieves a change of representation of the memory objects, by calculating the physical memory addresses of memory object fragments based on the memory object's identifier, OID, and the fragment offsets in the logical address space associated with the memory object.
FIG. 4 is a more detailed block diagram of a compute node in accordance with an embodiment of the invention.
FIG. 5 illustrates the high-level flow of information in a compute node in accordance with an embodiment of the invention, which is triggered by a miss event in the object cache.
FIG. 6 explains the task handling by the compute core of a compute node in accordance with an embodiment of the invention, as well as its interaction with the object cache.
FIG. 7 is a block diagram of the object storage firewall that can be used in compute nodes in accordance with embodiments of the invention.
FIG. 8 is a block diagram of the security management unit that can be used in compute nodes in accordance with embodiments of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings, but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

### DEFINITIONS

In the context of the present invention, a compute node is a scalable unit or building block for bigger compute systems like supercomputers or cluster computers. Compute nodes are replicated, typically a thousandfold or more, and assembled into a supercomputer. A compute node contains at least one compute core and additional components like object cache memory, node-local storage memory, object storage firewall, network interface, etc.

Hereinunder, the terms disaggregated storage (memory, store) and distributed storage (memory, store) are sometimes used interchangeably. Compared to node-local storage, which may be used to store prefetched copies of memory object fragments on the compute node and thus physically close to the compute cores, the distributed storage acts as a global main memory and is accessible to and accessed by many different compute nodes of a cluster computer. From the perspective of each compute node, the distributed storage is acting as the working memory for that compute node. A data communication network generally separates the compute node from the distributed storage. The distributed storage is used as non-persistent primary memory for the different compute nodes composing a cluster computer and short-term storage of memory objects on the distributed store for the purpose of calculations and program execution is different from the long-term storage of data structures in file systems related to secondary memory.

A compute core, in the context of the present invention, refers to a functional unit that is central to the compute node. The compute core is the node resource that is effectively executing program code; it therefor accepts instruction code and data to operate on. Both instruction code and data for execution by the core are core inputs that are stored as parts of memory objects on the distributed store as global main memory. Tasks that are scheduled for execution on one of the compute cores of the compute node are memory objects of a specific type and like any other memory object type, tasks can be temporarily dumped on the distributed store and later be retrieved from the distributed store, e.g. for the purpose of transferring the task for execution to the compute core of another compute node than is different from the task's creator node. Compute tasks performed by the core include the computational processes of arithmetic calculations on data stored in memory objects as well as address calculations. In embodiments of the invention, core inputs as well as tasks are requested, referenced and accessed through their corresponding memory objects, but are stored in many different locations of the distributed store, i.e. are distributed across and stored in non-contiguous regions of the global main memory.

Memory objects, in the context of the present invention, refer to a format for storing and organizing information in a disaggregated computer memory, e.g. the distributed store of a cluster computer. Here, information relates to data in the broadest sense and includes, among others, compute core inputs (instructions/code, data/operands), metadata associated with the information that is stored in memory objects, tasks, higher-level instructions like subroutines and functions, or combinations thereof. Memory objects are thus a container for organizing and storing content-related information. Information is typically stored in a self-contained way in memory objects. That is, one part of the memory object is dedicated to the structured storage of content (e.g., code, data, data or code references), whereas another part of the memory object is keeping a metadata structure as a description of the stored content (e.g., size of the memory object, content type, ownership data, access rights, timestamp information, object identification data).

Each memory object is also an ordered collection of non-contiguously allocated portions of computer main memory, designated as shards. A number of shards thus belong to and constitute together the memory object and, vice-versa, each memory object is subdivided into a plurality of shards as basic units for memory location within the distributed store. Each shard of each memory object is stored at a unique location in physical main memory, preferably a disaggregated memory system, which is indicated by a physical memory address in a physical address space. That is, from the main memory perspective, the physical addresses of the fragments a memory object is composed of are scattered across the physical address space associated with the computer main memory, e.g. a distributed main memory. Moreover, each shard of a memory object comprises a sequence of fragments as smaller subunits. It is thus also true that each memory object consists of a plurality of fragments. Fragments of memory object are defined as the basic unit of information that the compute cores of the compute node grasp in response to memory access commands (e.g. read and write commands). The size of memory object fragments is at least equal to the word size of the compute cores in the compute node, but generally are larger than the compute core's word size, e.g. is a multiple of the word size. However, compute cores use an alternative addressing scheme (i.e. compute core representation of the memory object) when requesting access to memory object fragments. From the compute core perspective, each memory object appears as a single contiguous block of memory that is subdivided into fragments. A logical address space is associated with the memory object as abstracted memory resource, in which the fragment are linearly referenceable through an offset. In consequence, the memory addresses of fragments have to translated between the logical address space of the memory object and the corresponding physical address space of the main memory, e.g. the distributed store, every time an exchange of memory object information is taking place between the compute node core(s) and computer main memory, e.g., during a memory access operation such as load/store operations. This underlying translation of fragments' memory addresses is performed by an memory object management unit and is completely hidden from the compute cores. Although bearing some resemblance with virtual memory architectures, the logic address spaces for portions of computer memory are implemented on a per-object basis instead of a per-process basis and compared to segmented or paged virtual memory resources, memory object fragments are not continuously referenceable in main memory but optimized for uniform distribution across the physical address space.

Memory objects further have an object identifier (OID) assigned to them, so that one can distinguish between the different coexisting memory objects. Moreover, the fragments of memory objects may be grouped into larger context-related structures such as chunks or nested chunks, e.g. separate chunks for metadata, code and data. Chunks of memory objects may be logical partitions of the logical address space that is associated with the compute core representation of each memory object.

A shard is defined as a predetermined number of memory object fragments that succeed each other in the logical address space associated with that memory object. Expressed in other words, a shard is a logical sequence of memory object fragments (contiguous region of the memory object's logical address space) of a predetermined length that is usually stored at the same physical location in the distributed store acting as the computer main memory (main memory for the compute node and the cluster computer containing the compute node). Typically, shards of memory objects rather than individual fragments are accessed (e.g. read or written) on the distributed store.

A chunk of a memory object is defined as a logical partition of the logical address space associated with the memory object. The chunk of a memory object typically counts many different shards and hence even more fragments.

Hereinbelow, the terms access permissions and access privileges are used interchangeably, as are the terms "task manager/task management unit" and "runtime manager/runtime management unit".

Memory management of most modern computer processors is based on virtual memory, in which the operating system assigns a virtual address space to a program loaded for execution, i.e. a process. Through the implementation of virtualization, the program perceives memory as a contiguous directly addressable space (flat or linear memory). Virtual address spaces can be assigned to each running process independently. These computer processers exclusively use virtual memory addresses to reference and access information - bytewise - that is located in the virtual memory and therefore rely on a memory management unit (MMU) that translates the virtual memory addresses into corresponding physical memory address (references to locations in main memory, e.g. RAM, or even in secondary storage, e.g. paged out to hard drive). Virtual memory address calculations are routinely performed by the computer processors, either within dedicated address calculation units or within one of the processor's execution units itself. Moreover, the relatively slow access to main or primary memory is usually alleviated by the use of hierarchical multi-level cache memory, which are intermediate memory devices situated between the processor and main memory to reduce read latencies and CPU stalls.

In contrast to the memory management techniques and related memory management units used by conventional computer processors, processing units of embodiments of the present invention are configured to reference and access information, i.e. memory contents, as fragments of memory objects. Much like the address spaces in virtual memory implementations, the memory objects represent contiguous blocks of memory to which tasks or threads executed on a compute core of the compute node have direct access, provided the granted access rights allow to do so. The contiguous block of memory associated with each memory object is subdivided into a plurality of linearly addressable fragments, thus forming a logical address space for information retrieval by the compute core executing the tasks. Logical memory addresses of fragments accommodated in the memory object do have a physical counterpart; the logical memory addresses are mapped onto corresponding physical addresses that reference locations in main memory. As opposed to virtual memory, memory objects are not exclusively linked to processes. In fact, a process can create multiple independent memory objects. A memory object may be created as an efficient means to organize and access memory contents that are so interrelated to form a unit of information storage. This includes, for example, low-level features like constants, data variables, address variables, opcode/microcode and, more importantly, high-level programming language features such as arrays, callable units (e.g., functions, methods, subroutines), loops, matrices, vectors, trees, lists, classes and objects (as known from object-oriented programming), threads, etc. These and other features may be mixed and combined into predefined or user-defined units of information storage, i.e. memory objects. Eventually, stored information referenceable through the memory object may also include metadata, e.g., metadata about the memory object itself (date of creation, creating entity, size, permissions) and/or metadata about the information stored in the memory object's fragments, e.g. information on the data type and size of chunks of fragments (code chunk, data chunk, ...).

Different memory objects are distinguishable and can be referenced via a unique object identifier, called OID for short. A memory object may be empty upon creation, e.g., not yet contain any information stored in main memory or valid references to such information. The fragments contained in each memory object typically have a predefined size, e.g. 64 byte worth of physical memory in the distributed store, and can relate to any kind of information, including but not limited to, e.g., instructions (code), numerical data or operands consumed by the processing unit while executing instructions, and metadata associated with the memory object. Each fragment has a specific location within the memory object, which is indicated by an offset variable and used for addressing by the compute cores. Fragments that are consecutive in the memory object's logical address space can be structured into and collectively referenced as chunks; e.g. data chunks related to the storage of vector or array elements, or code chunks related to the storage of a set of program instructions.

A particular fragment of memory can be referenced by the combination of object identifier and fragment offset with respect to the memory object that is containing the fragment. This combination is unique across all coexisting memory objects that access information stored in computer memory, e.g. shared primary memory in a supercomputer comprising many compute cores that are each capable of generating and holding multiple memory objects. In consequence, a fragment of memory generally becomes inaccessible if the corresponding memory object ceases to exist, e.g. upon destruction of the memory object. On the other hand, the logical address space of each memory object is isolated from the logical address spaces of all the other coexisting memory objects, thereby improving computer security. Memory objects are an efficient implementation against unauthorized memory access, because the memory object that is requesting access to fragments belonging to a different memory object is unaware of the different memory object's identifier.

A further layer of security is added by the innovative fact that the different fragments of one and the same memory object are stored in very different and unrelated locations in physical memory, i.e. each memory object, when stored in physical memory, is scattered throughout the available physical address space. For instance, the calculated physical memory addresses for fragments of the memory object to be stored are distributed in a uniform and random fashion. At the same time, different memory objects are stored in a non-overlapping manner in physical memory. This makes it impossible for one memory object to overwrite fragments belonging to a different memory object.

Another difference between memory objects and conventional virtual memory implementations is that logical memory addresses of fragments of memory objects are not subjected to an address translation based on page table entries; instead, the physical addresses of locations in computer memory corresponding to the respective fragments of memory objects are calculated. This is a major advantage compared to conventional computer architectures that revolve around the concept of paging, because a calculation of the corresponding physical memory addresses does not require the use of large page tables. This frees up memory resources that would otherwise be allocated to the storage of the page tables. Moreover, multi-node computers in which information sharing between the individual nodes is desirable, the page tables maintained with respect to the different nodes need to be synchronized. A calculation-based mapping of each fragment's logical address onto the corresponding physical address is not confronted with the communication overhead and power consumption which arise out of the page table synchronization. Furthermore, the time needed for performing the calculation of the physical memory address of each fragment from the aforementioned unique combination of OID and fragment offset is deterministic. This is in contrast with the often unpredictable delay of information retrieval in the event of cache misses most conventional compute architectures experience.

A further advantage of embodiments of the invention over most conventional compute architectures and memory management techniques is that hierarchical multi-level cache memory is not needed. This saves hardware resources and energy related to the implementation and management of these traditional cache hierarchies. Indeed, data locality (in physical memory) cannot be exploited in embodiments of the invention as efficiently as it would be the case in conventional compute architecture with multi-level cache hierarchy, because consecutive fragments of a memory object are in general not mapped to nearby locations in the computer's main memory. Furthermore, in the absence of one or more levels of shared cache memory in multicore processor architectures, memory management is not facing the issue of cache coherency.

Nonetheless, it is possible for embodiments of the invention to provide a specialized kind of object cache and compute node-local memory subsystems, which temporarily stores the copied contents of one or multiple memory objects, or parts thereof, which have been fetched or prefetched from the distributed store. For instance, one or more object caches of a compute node in accordance with embodiments of the invention could temporarily store copies of recently accessed memory object fragments, prefetched memory object fragments that constitute data inputs to tasks scheduled for execution on one of the compute cores of the compute node, and/or fragments whose offsets are nearby the offset of previously accessed fragments within one or multiple memory objects.

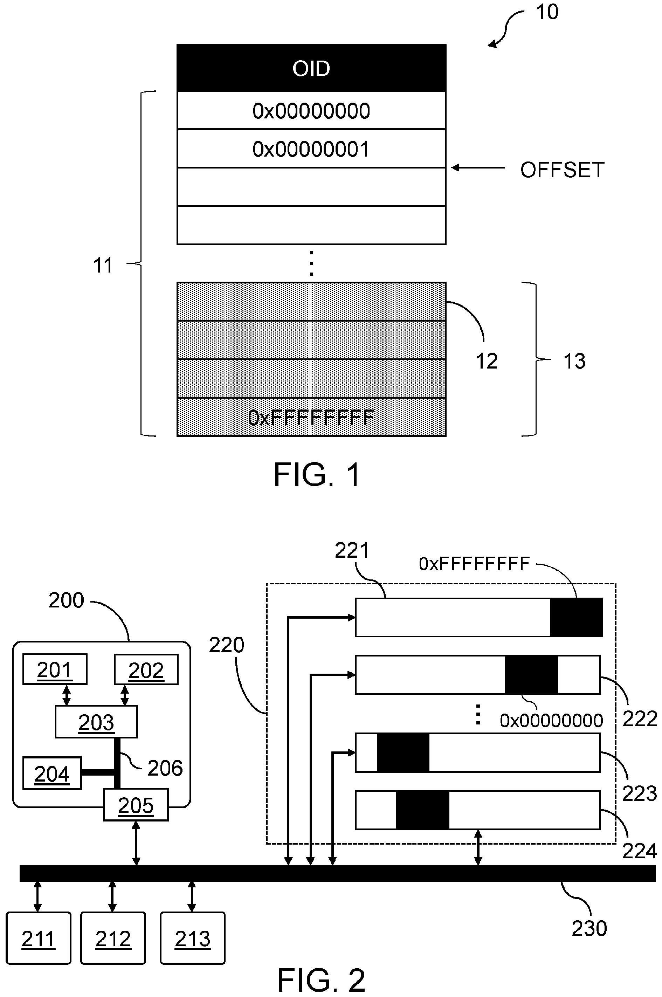

FIG. 1 graphically represents a memory object in accordance with embodiments of the invention as it is perceived by the at least one compute core of the compute node. The memory object 10 is identified through a unique OID and comprises a linear space 11 of logical memory addresses, e.g. 32-bit long logical memory addresses 0x00000000 through 0xFFFFFFFF. Nonetheless, the logical address space of the memory object may be smaller or larger, depending on the overall size of physical memory attributed to the supercomputer in which the compute node is deployed. Each logical memory address refers to a fragment 12 of information stored on the computer's primary memory and forming part of a larger semantic unit of memory content, i.e. the memory object 10. An offset variable 'OFFSET' is an index to the location of a particular fragment within the address space of the memory object to which is belongs. Fragments 12 are sized equally, e.g. each one 64 byte worth of physical storage, although different fragment sizes may be defined initially. Wider fragments have the advantage that more memory content can be accessed through a single load/store command, but require wider data busses too. A contiguous region within the memory object's logical address space 11 is clustered and assigned to a shard 13, which comprises a sequence of fragments. Although not shown in FIG. 1, it is the possible to create logical partitions of the address space associated with the memory object and identify each logical partition with a chunk of the memory object. Chunks can be used to separate different data types or data purposes in the memory object, e.g. separate one of more of: metadata, input data for tasks, user code to be executed on one of the compute cores, system-relevant data.

FIG. 2 illustrates the way the memory object is perceived form the perspective of the distributed store as the global computer main memory. The compute node 200 comprises a one or more compute core 201, 202 that are coupled through an object cache 203 of the compute node to the distributed store 220. The compute cores 201, 202 access memory object fragments directly from the object cache 203, or indirectly if memory object fragments held in the object cache are transferred onto a faster scratchpad memory (not shown) prior to consumption by the compute cores. Memory objects fragments for consumption by the compute cores 201, 202 are prefetched from the distributed store 220 and placed into the object cache 203. A memory object management unit (MOMU) 204 is configured to calculate the physical memory addresses of memory object fragment in the distributed store 220 for which memory access has been requested by the compute cores 201, 202. The MOMU 204 and the object cache 203, as well as other components of the compute node, are capable of exchanging messages over a node-local communication network 206, e.g. a system bus or a network-on-a-chip, NoC. A communication interface 205, e.g. a cluster network interface, connects the compute node 200 to a cluster-wide communication network 230. Further compute nodes 211, 212, 213 and the individual storage nodes 221, 212, 213 and 214 of the distributed store are also connected to the cluster-wide communication network 230. A unique network address is assigned to each addressable end node of the cluster-wide network 230, including the compute nodes 200, 211, 212, 213 and the storage nodes 221 to 224. The distributed store is assembled from a plurality of storage nodes 221 to 224, each containing a network interface and a memory module with memory controller (not shown). A portion of the physical memory addresses calculated by the MOMU 204 of each compute node, e.g. a bit field of predetermined length, preferably corresponds to the unique network address of one the storage nodes 221 to 224. The fragments of a single memory object 10 as shown in FIG. 1 are scattered across the different storage nodes 221 through 224 and indicated as black regions in their respective physical memories.

The compute cores 201, 202 may be any register-based processor core with RISC, CISC or VLIW-type architecture as known in the art. A typical compute core comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc.

Although the cores of a compute node can, in principle, reference individual fragments of memory objects for computational tasks, it is more efficient for the cores to access and consume information content from linear data spaces, e.g. vectors of data in the strict sense or sequential instructions (e.g. as generated by the compiler). Therefore, compute nodes in accordance with embodiments of the invention may optionally include at least one data formatting unit, which assembles fragments of a referenced memory object into 'views', whereby information utilization, e.g. data utilization, by the one or more cores of the compute node is improved. Data fragments can be extracted out of a memory object according to a view definition, which is by itself stored in the same or a different memory object and executed by a dedicated data address calculation unit. A particular view of a memory object may be generated by reordering and/or vectorizing a subset of the fragments contained in the original memory object such that the core(s) can consume the prepared views in a linear fashion.

A typical situation that benefits from the reordering and/or vectorization of data fragments is the access of elements of an array, in which the access follows a particular patterns (e.g. using a specific stride parameter). The preparation of suitable views for the respective cores by the at least one data formatting unit may be optimized by a compiler at compile time. Until being consumed by the core(s), individual memory object fragments, or views that are generated from accessed memory objects, may be placed temporarily into a scratchpad memory or register file of the core(s). More generally, cores of the compute node can execute compute tasks with respect to any memory object; different memory objects being distinguished through different addresses at the core level (e.g. the OID is part of the address at core level).

The memory object management unit 204 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses by the use of page tables. Page table entries may be partly held in private memory of the MMU or a translation lookaside buffer (TLB), operatively coupled to the MMU, assists the MMU with the address translation task. TLB misses cause the CPU or the operating system to start a page walking process in which page table entries are retrieved from main memory. The MMU is also responsible for raising page fault exceptions in the event that no page table entry is found in main memory with respect to the virtual memory address currently being translated. A conventional MMU thus spends considerable amounts of time and energy to perform address translations by lookup operations in page tables. In contrast thereto, the memory object management unit (MOMU) in accordance with embodiments of the present invention is configured to derive the physical memory address corresponding to the memory object fragment that is referenced by the core by way of calculation. More specifically, the MOMU calculates the physical memory address as a function of the fragment offset and the OID for the memory object that contains the referenced fragment. In preferred embodiments of the invention, the MOMU calculates the physical memory addresses according to a hash function. Thence it follows that no lookup operations for page table entries are necessary, page tables do not have to be maintained in computer memory and page fault exceptions never occur. An OID generation unit of the MOMU may be configured to issue new OIDs in response to an OID request from a requester, e.g. a runtime manager of the compute node which requests new OIDs for child task memory objects or which requests a new OID for a data-type memory object to which the result of a mathematical computation or transformation (number or vector addition, multiplication, scaling operations or more complex arithmetic functions such as logarithms, exponentials, or trigonometric functions, and others) are written after execution the computation by the compute cores. In alternative embodiments, the OID generation unit of the MOMU can be implemented, e.g. embedded, in the runtime manager of the compute node. A particular type of memory access request messages is concerned with memory object manipulations that target the metadata associated with memory objects, e.g. metadata stored in a dedicated metadata chunk of the memory object which also includes security attributes (access permissions) related to the memory object. These memory object manipulation operations may be handled by an object manipulation unit of the MOMU. They may include the splitting or merging of two distinct memory objects, the change of access permissions, and others.

In preferred embodiments of the invention, a portion of the calculated physical address, e.g. the k most significant bits, directly form a corresponding network address for one the memory modules, whereas the least significant bits can be used by a local memory controller of the receiving memory module to determine the location in the local memory that has been attributed to the memory module. Alternatively, a network address for the physical address can be obtained by calculation or via a lookup table.

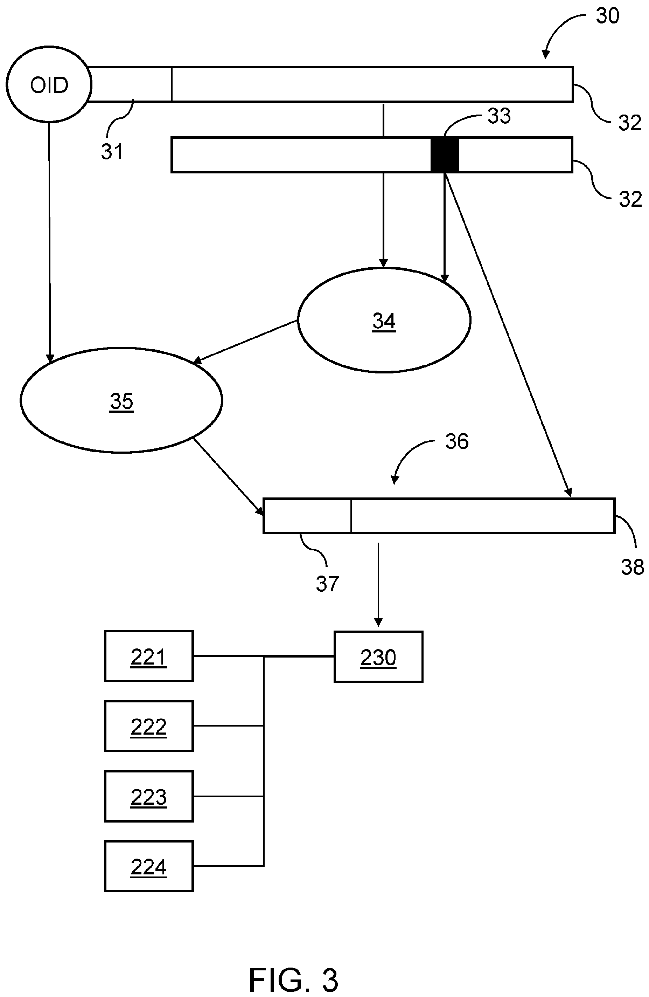

FIG. 3 illustrates the steps that the MOMU 204 of the compute node 200 performs when preparing a memory object fragment from the object cache 203 or node-local memory subsystem for transmission over a cluster network and storage on the distributed store 220. Memory object 30 depicts the continuous block of memory as perceived by the compute core. The memory object 30 contains a first chunk 31 that is allocated to metadata and a second chunk 32 that contains data. The compute core accesses information of fragment 33 in chunk 32 in the context of a write command. An OID is associated with memory object 30. The MOMU generates the OID upon creation of the memory object, typically when a task using this memory object is first evoked.

The MOMU uses the chunk index and the relative fragment offset within the second chunk 32 to compute the absolute offset of the fragment 33 in the memory object 30 in step 34. The absolute offset of fragment 33 and the OID are inputs to a hash function that the MOMU calculates in step 35. Next, the MOMU prepares a data packet 36 for submission over the node-internal communication network and the cluster-wide network, wherein a first portion 37 of the data packet 36 contains the output of the hash function from step 35 and a second portion 38 contains the information to be stored in the physical memory location associated with fragment 33. The most significant bits of the first portion 37 are identical to a network address of the cluster network 230 and thus identify the recipient of the data packet 36; in this case, the recipient corresponds to one of the memory modules in the storage nodes 221 to 224. The least significant bits are used by the memory controller of the receiving memory module to determine the location in its own local memory, where the fragment information is stored.

Evaluating the output of the hash function (i.e., the hash value) in step 35 therefore amounts to the calculation of the physical memory address for memory contents to be loaded or stored. The computed hash value are used as indexes into a giant distributed hash table for information retrieval. The distributed hash table is formed by the joint memories of all memory modules of the distributed object store 220. The hash table entries correspond to the memory contents that are stored in the respective memory object fragments and are referenced by the physical memory addresses (the local memory addresses being the hashed keys). The use of a hash function ensures that physical memory addresses are distributed in a uniform-random way and that information can be accessed with uniform latency. Fragments belonging to one memory object are thus scattered across the distributed memory. Each fragment worth of information can be stored in multiple locations of the distributed memory object store, e.g. duplicated, to save a backup copy in the case of failure of one of the memory modules. Preferably, the hash function used by the MOMU is a minimum-collision hash function. Collisions can be detected at the level of the individual memory modules that compose the distributed memory object store; write request are locally checked against an allocation table. In the event that a collision is detected locally, the memory controller associated with the memory module relocates the information to be stored to an alternative storage location in memory. The allocation table may be configured to always provide at least one alternative storage location. Moreover, the MOMU may be configured to compute a series of hash values (orthogonal hashes) for each fragment to be stored in the distributed memory, e.g. up to four or more different physical memory location. If a collision is detected with respect to the first hash value of the series of hash values, and the alternative storage location is also occupied, then the fragment of information to be stored can be forwarded to the memory module corresponding to the next hash value in the series of hash values. In the rare case that collisions are detected with respect to all hash values of the series of hash values, and all the alternative storage locations are also occupied, the distributed object store considers main memory to be full and issues a write failure. This may result in the operating system displacing some memory contents into secondary memory storage devices.

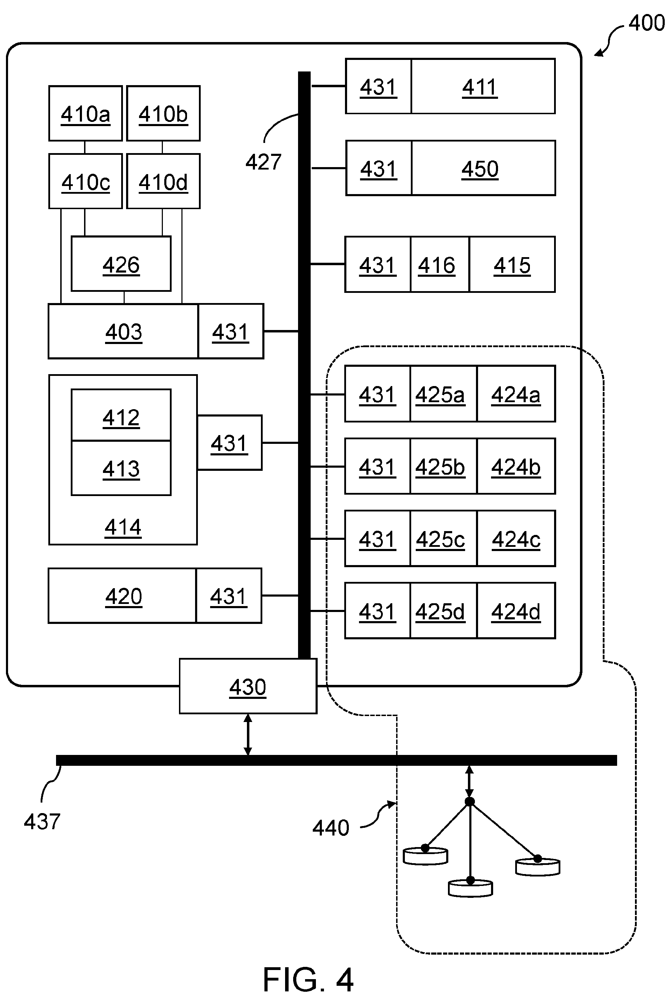

Referring now to FIG. 4, a block diagram of a compute node in accordance with an embodiments of the invention is described in more detail. The compute node 400 comprises compute core arrays 410a-d, an object cache 403, a memory object management unit (MOMU) 420, and a network interface 430 as node interface to a communication system or subsystem 437. Additionally, the compute node 400 comprises at least one task manager 411, data formatting units 412, address calculation units 413, a node-local cache memory 415 with associated controller 416, and node-local store units 424a-d with respective controllers 425a-d. The data formatting units 412 and address calculation units 413 may be arranged into combine data formatting/address calculation units 414, each being associated with and serving a respective one of the compute core arrays 410a-d. Preferably, a fast register file or scratchpad memory 426 is provided between the data formatting/address calculation units 414a-d and the compute core arrays 410a-d, wherein each core array comprises a plurality of compute cores, e.g. two, four, or more than four compute cores per array. A communication network 427, e.g. a network-on-chip, interconnects the various components of the compute node 400, which are all equipped with adequate network interfaces or communication ports 431.

In typical applications, the node-local store units 424a-d, e.g. DRAM modules or nonvolatile memory modules, effectively contribute to the primary memory of a computing device composed of multiple similar or identical, interconnected compute nodes. Thus, the node-local store units 424a-d are generally treated like distributed store units of a larger computer memory system structured as a distributed store 440 for memory objects. In other words, the store units 424a-d are elements of a disaggregated memory model. In embodiments of the invention, store unit 424a-d may be assembled onto a circuit board for the compute node 400 or may be integrated onto a chip for the compute node. Memory access to each store unit 424a-d is controlled locally by a corresponding memory controller 425a-d.

Conventional compute cores are regularly operated in modes which allow the calculation of virtual memory addresses for fetching future data from main memory and the correct formatting of the fetched data for efficient use by the core's executions units. CPU cycles allocated to these tasks are lost for actual computational tasks performed on the data fetched from main memory. In the present embodiment, the data formatting units 412 and address calculation units 413 are functional units that are configured to perform the data formatting tasks and address calculation tasks, respectively, but have been moved out of the compute cores. This decoupling from the compute cores is also referred to as "decoupled memory" and has the advantage that data formatting units, address calculation units and compute cores can be operated to perform different tasks concurrently. Importantly, the compute cores can spent more cycles on computational tasks, while the address calculation units 413 determine the logical memory addresses of memory object fragments, e.g. containing data/operands for computations, to be consumed by the compute cores 410a-d in the near future. The address calculation units 413 may execute a kernel in order to execute view definition associated with a memory object, e.g. as specified in a metadata chunk of the memory object. Memory object fragments loaded or pre-fetched from the distributed memory object store 440 are referenced by the logical addresses computed by the address calculation units 413 and subsequently translated by the memory object management unit 420. Although most of the address calculation is handled by the address calculation units 413, it may still be the case that the compute cores 410a-d are occasionally used for address calculation tasks. The data formatting units 412 then handle the formatting of information from memory object fragments that have been loaded or pre-fetched from the distributed store 440. Formatting of data (including instructions) allows the compute cores to perform computations more efficiently. Information is not always stored in computer memory in a way that is adequate or optimal for computational tasks. For instance, instructions may have to be fused into more complex instructions for the compute cores, array elements may have to be aligned and rearranged into a vectorized format that is usable in vector operations by the compute cores, or number formats may have to be converted. In operation, the data formatting units thus prepare the loaded or pre-fetched information for future use by the compute cores. Information preparation tasks performed by the data formatting units include the following: data ordering, data vectorization, data type casting. The correctly formatted information is then transferred to the scratchpad memory 426, where it is buffered until one of the compute cores starts consuming it. Advantageously, the data formatting units also buffer differences in the information consumption rate between the compute cores on the one hand and the information fetching process on the other hand. The former is steady and synchronous, whereas the latter is asynchronous and out-of-order.

As explained before, the MOMU 420 is the functional unit of the compute node that handles memory objects, e.g., is hardwired or executes kernels that cause the creation and destruction of memory objects upon request by the task manager 411, generates the OIDs associated with a new memory object and communicates it to the task manager 411, controls the access of fragments within memory objects when reading information from or writing information into the distributed (memory object) store. In embodiments of the invention, the MOMU may generate the OID as a snowflake ID, e.g. combine timestamping information and a node identifier (unique) to obtain a memory object identifier (OID) that is unique. The MOMU may also be configured to initialize, execute and control pre-fetching operations on memory object fragments. Load/store commands are submitted to and handled by the MOMU 420 similarly to the steps explained with reference to FIG. 3, with the difference that a local copy of pre-fetched and/or repeatedly used memory object fragments, or even entire memory objects, may be kept in the node-local cache memory 415. In the present embodiment, the MOMU 420 thus first checks whether the node-local cache memory 415 is holding the information of a memory object fragment that is being referenced by one of the compute cores or pre-fetched by the MOMU. To this end, the MOMU may calculate a (shorter) local hash code from the fragment offset and the OID of the memory object containing the fragment and submit the local hash code to memory controller 416, which in turn checks it against its private local cache hash table. If the requested fragment exists as entry of the local cache hash table, the information stored in the fragment is forwarded to the MOMU; otherwise, the MOMU will continue with the calculation of the physical memory address for accessing the requested fragment in the distributed object store 440 and prepare the corresponding network packet. In embodiments of the invention, the MOMU is not limited to the aforementioned tasks; it can also manipulate metadata that is stored in fragments of memory objects, e.g., to merge or split memory objects, and may further support memory object manipulations required for immutable data structures.

In contrast to conventional compute architectures, information stored in the framework of memory objects does not have to undergo a lengthy search. When information is fetched from a remote node in traditional implementations multi-node compute clusters, the requesting node first checks all its cache levels before the operating system is queried, sends a message to the remote node, retrieved the requested data and finally hands it over to the requesting node. In embodiments of the invention, no such complex information retrieval process is necessary, because the MOMU of the requesting compute node can exactly locate the requested piece of information in memory through a calculation of the physical memory address. A network packed can then be issued directly to the distributed memory controller whose store unit holds the information. Hence, neither the operating system nor a central database is involved in the information retrieval, whereby resources and latency related to information access are significantly reduced.

An object storage firewall 450 is configured to manage privileges, verify and grant access rights related to memory objects, or parts thereof, which are passing through and handled/translated by the MOMU 420. Further related to security, the node's communication interface 430 or a dedicated security management unit, rather than the node's MOMU handles encryption/deciphering of information, e.g. comprises a de-/encryption engine that perform encoding and decoding of operations on the information to be transmitted over the communication network and a secure store for digital keys. This further reduces information retrieval/memory access latency, because no encryption is required for information that is already present in the node-local memory subsystem 415.

The task manager 411, also referred to as runtime manager, is configured to allocate and assign tasks at runtime to the other components of compute node 400. Each task can be broken up into a sequence of subtasks, including, not necessarily in this order: the assignment of computational subtasks to the various compute cores of arrays 410a-d, the assignment of data formatting subtasks to the data formatting units 412, the assignment of address calculation subtasks to the address calculation units 413, fragment prefetching by the MOMU 420, and memory object creation/destruction requests to the MOMU 420. Not all the subtasks are always present in each sequence; there can be bubbles/gaps. The task manager 411 is also configured to control the timing and order in which the allocated tasks are performed by the other compute node components. A corresponding kernel may be executed by the task manager to this effect. In preferred embodiments of the invention, the task manager 411 controls the runtime behavior of allocated tasks such that different compute node components operate in parallel, i.e., perform different tasks concurrently. Moreover, the task manager 411 may implement pipelining of tasks in which subtasks have to be completed sequentially. Therefore, the data formatting units 412, address calculation units 413, and MOMU 420 may be assigned different tasks in the respective stages of the pipeline, but jointly complete a single task by progressively passing the outputs of a subtask in a current stage to the relevant unit of the next stage of the pipeline.

In embodiments of the present invention, the one or multiple task managers of the compute node may be implemented as traditional cores that are configured to create task objects - a special subtype of the generic memory objects - and pass the OID associated with the task object (task OID) to the data formatting units and compute cores for execution. Consequently, task managers in accordance with embodiments of the invention are also capable of generating new memory objects, e.g. task objects, which can be stored in the distributed memory object store (computer main memory) and local cache memory like any other type of memory object. This greatly simplifies the problem of task migration between different compute nodes. Additionally, the task manager(s) may be programmed to run a task scheduler (itself a task object) that assigns and times the execution of other task objects such as task objects related to data prefetching, data formatting, computations, memory object manipulation, etc. The task objects typically define operations on 'views' derived from memory objects.

In embodiments of the invention that provide multiple task managers, e.g. as part of the same compute node or distributed over several compute nodes of a multi-node supercomputer, an initial task manager is selected to start in a boot mode, which allows the compute node or supercomputer to accept user code (program code) as input, divide the user code into subtasks and hand these subtasks over to the other task managers, which may then accept subtasks for execution. Task scheduling, in the context of the present invention, is a considered itself as a particular type of task and may be part of the machine's firmware (i.e. compute node firmware).

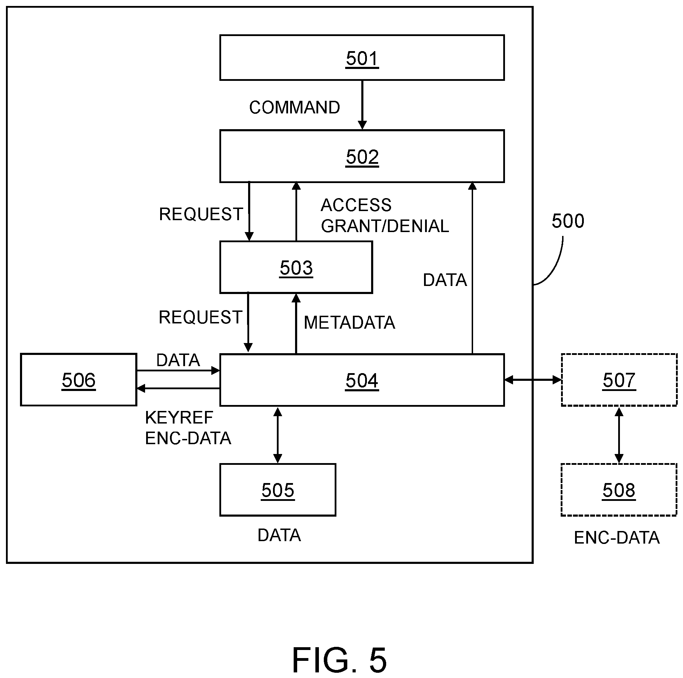

FIG. 5 illustrates the high-level flow of information in a compute node 500 in accordance with an embodiment of the invention, which is triggered by a miss event in the object cache. Here, information relates to command signals, e.g. messages requesting read, write or modify access to fragments or fragment sequences of memory objects present in the distributed store, notification signals, e.g. access grant or denial messages, the transmission signals that convey the contents of or the metadata associated with accessed memory object fragments or fragment sequences (shards), as well as security-related data with respect to accessed memory object fragments or fragment sequences, which includes encryption keys.

Program code, in the form of instructions, is executed on the one or more compute cores 501 of the compute node 500. An object cache 502 is interposed between the one or more compute cores and the memory object management unit 504 (MOMU) such that the one or more compute cores 501 of the compute node 500 are operatively coupled through the object cache 501 and the MOMU 504 to the distributed store 508. The data of memory object fragments that is consumed by the one or more compute cores 501 is either directly retrieved from the object cache 502, or is first transferred from the object cache 502 to a dedicated scratch pad memory (not shown) in close proximity to the one or more compute cores 501, from which it is then directly retrieved by the one or more compute cores 501. Only a limited number of memory object fragments can be retained in each cache line of the object cache 502. On a cache miss, the object cache controller (not shown separately) generates a request message for the memory object whose fragment was not found in the object cache 502 and dispatches the request message to the node-local memory subsystem 505. If the compute node 500 does not contain a memory subsystem, the request message is sent to the distributed store 508 instead. Next to a source and destination field embedded in the message header, the request message contains information on the type of access (e.g. read or write access), the OID and the fragment's offset in the memory object to be accessed, and the identity of the requester, e.g., the OID of the task (also referred to as TOID) that is at the origine of the memory access.

In embodiments of the invention, the source field of memory request messages indicates the component of the compute node, or more generally the component of the multi-node compute system, to which the requested information or an error message has to be sent after a successful or unsuccessful retrieval, respectively. The destination field may be left blank upon creation of the memory request message and completed later on, when the request message reaches the MOMU. The components of the source and destination field have an associated network address, e.g. are end points of the compute node and/or cluster-wise communication network. In the preceding example, the object cache would be indicated in the source field and the destination field is completed by the MOMU at the time of reception of the request message, e.g. based on the OID/offset information embedded in the message body.

An object storage firewall 503 is interposed between the object cache 502 and the MOMU 504 and intercepts the request messages of the object cache. Depending on the type of access and the privileges that have been granted for the requester (identified by the TOID) with respect to the memory object to be accessed (identified by the OID), the request messages is either accepted by the object storage firewall 503 and passed on to the MOMU 504 for physical address calculation, or is rejected by the object storage firewall. In the former case, the object storage firewall 503 composes an access grant confirmation message and sends it back to the object cache 502, whereas in the latter case, a denial of access message is composed by the object storage firewall 503 and sent back to the object cache 502. In cases in which one or both of the TOID and the OID are unknown to the object storage firewall 503, a request for metadata content retrieval with respect to the memory objects designated by the TOID/OID is sent to the MOMU 504. A more detailed description of the object storage firewall is given further below.

Based on the OID and fragment offset information, the MOMU 504 calculates the physical address for the corresponding memory location in the distributed store508, where the requested memory object fragment is stored. As explained before, the physical address is calculated instead of being looked up in address translation tables. The physical address may be calculated as the output of a hash function which accepts the OID and fragment offset in the memory object corresponding to the OID as function inputs and part of the calculated physical memory address may be used as a network address that identifies the location of a storage node of the distributed store 508 in an extended cluster network 507 underlying the cluster computer. The MOMU 504 reassembles a request message for the same type of access but with an updated destination field, wherein a destination is derived from the calculated physical address. More specifically, the MOMU 504 calculates at least one hash value of a hash function that uses the OID and fragment offset information included in the memory request message as hash keys and inserts this calculated hash value into the destination field of the request message header. If the compute node 500 comprises a local memory subsystem 505, e.g. for storing copies of prefetched memory object fragments but never the entirety of memory objects present in the distributed store, the compute core 501 and object cache 502 are operatively coupled through the local memory subsystem 505 to the distributed store and the MOMU 504 first directs the reassembled request message to the local memory subsystem 505. Otherwise, the reassembled request message is sent over the cluster network 507 to the distributed store 508. If the requested memory object fragment is present in the local memory subsystem 505, it is retrieved from the local memory subsystem 505 and sent to the object cache 502. If not, the distributed store 508 is queried by rerouting the request message to the distributed store 508. More specifically, a local memory object storage controller of the memory subsystem 505 usus a portion of the hash value in the destination field of the memory request message as an index into an allocation table and if no valid entry is found in the allocation table, then the memory request message (e.g. a data packet) is forwarded to the address encoded in the destination field. The distributed store 508 can always serve any kind of request for memory object access as long as it is permitted, because all the memory objects created or needed during program execution are stored and accessible on the distributed store 508 as global main memory of the cluster computer containing the different compute nodes.

In general it is advisable to increase security by encrypting memory object fragments that are retrieved from or send to the distributed store, since this involves the transmission of data packages over the cluster network. Encrypting the data exchanged with the distributed store reduces the vulnerability of the compute nodes of a cluster computer, as well as the programs executed on the compute cores of a compute node, to malicious attacks. Therefore, a security management unit 506 of the compute node 500 may be operatively coupled to the MOMU 504 and configured to encrypt or decrypt information that is retrieved from or sent to the distributed store 508.

The encryption can be performed at the shard level and is typically applied to all chunks (logical partitions) of the memory object, except for the metadata chunk or part of the metadata chunk of the memory object. The metadata chunk of a memory object may contain embedded references to other memory objects and frequently accessed. Encryption and decryption of the metadata chunk is thus often inefficient. Another reason is that the metadata chunk of a memory object may contain references to secure keys (e.g. digital encryption/decryption keys), which secure keys are stored separately in a secure location, e.g., in a key table within a security management unit of the compute node. However, it is possible to not encrypt information pertaining to a fixed-sized first portion of the metadata chunk, e.g. the first 64 bytes of the metadata chunk, which comprises the reference to the secure key, but nevertheless encrypt the remainder portion of the metadata chunk. The MOMU then transmits memory object fragments to be written to the distributed store to the security management unit for encryption, and joins the reference to the secure key that is embedded in the first portion of the metadata chunk of the memory object containing the fragments to be written. The OID of the memory object to be accessed has been communicated to the MOMU and thus allows the MOMU to retrieve the secure key reference related to this particular memory object: the physical memory address for the first portion of the metadata chunk can be calculated for the given OID and the fixed number of fragments within the fixed-sized first portion of the memory object with the corresponding OID. The security management unit then uses the secure key reference to retrieve one of the secure keys that are stored in a key table of the security management unit. The relevant parts of the memory object to be accessed are then encrypted with the retrieved secure key through an crypto-engine of the security management unit. The security management unit substitutes the plain (i.e. non-encrypted) information in the request message with the encrypted information and sends the encrypted request message back to the MOMU, which in turn sends it out to the distributed store. In some embodiments of the invention, a second layer of encryption can be added by encrypting the request message as a whole, which is sent over the cluster network. Encryption of the whole request message may be carried out on the basis of a cluster-wide session key, e.g. by a part of the security management unit or a separate functional unit. This ensures that data traffic over the cluster network is encrypted, i.e. instead of only encrypting memory object fragments to be accessed, whereby vulnerability to malicious attacks is further reduced. Likewise, decryption of incoming cluster network messages received by the compute node, e.g. response messages that are serving memory accesses to the distributed store, is obtained through the cluster-wide session key before any memory object information included in the incoming message is decrypted by the crypto-engine of the security management unit. The decrypted memory object fragments are then sent back to the MOMU, which passes them on to the object cache. The object storage firewall can be bypassed in this case. In embodiments of the invention, responses to memory requests, in particular responses from the distributed store, have the object identifier 'OID' and the request ID of the original memory request included in the response message header. Association between the OID and request ID information can be obtained with or without request lists kept in the MOMU. Therefore, the MOMU can access and retrieve the secure key reference from the metadata portion of the memory object equated with the 'OID' that is embedded in the response message.

It is an advantage of embodiments of the invention that encryption of information stored in memory objects is very flexible and different encryption standards and/or encryption rules can applied to different chunks of memory objects and/or different types of memory objects. Here, types of memory objects refers to the context in which the information stored in the memory object is used by the compute node during program execution or refers to the circumstances under which the memory object has been created. A non-exhaustive list of memory object types includes: data view memory objects that encode dependences on other memory objects and optionally also run-time executable functions for the calculation of logical addresses within the address space associated with the other memory objects, instruction-type memory object (e.g. storing instruction code for the compute cores of a compute node), system-type memory objects (e.g. storing tag table entries for the tasks managed by the runtime management unit), and data-type memory objects (e.g. storing numerical or alphanumerical data, data arrays, data sequences, data lists, data records, pointers to data, etc.).

It is an advantage of embodiments of the invention that secure keys can be generated and stored securely within the security management unit. Secure keys may be generated at the time of device manufacture and stored permanently in the key tables of the security management unit. Preferably, the secure keys are not exportable, or are exportable in encrypted form only, which drastically reduces the risk of secure digital keys leaving the compute node.

It is noted that the granularity of memory accesses to the distributed store is typically coarser than the memory access to the object cache. For instance, memory accesses to the distributed store are performed at the shard level, whereas the line/block size of the object cache typically corresponds to a smaller number of successive fragments in the logical address space associated with a memory object which is only a fraction of one shard. The memory components of the local memory subsystem also typically store and retrieve memory object-related data at the shard level. In embodiments in which memory accesses to the distributed store are performed at the shard level, the MOMU is usually configured to first determine the shard number or shard index based on the fragment offset, before calculating the physical memory address as a function of the shard index and the memory object's OID. If the logical address space associated with the memory object and representing the memory object vis-à-vis the compute cores is logically partitioned, i.e. comprises at least two logical partitions designated as chunks, the MOMU is may be configured to determine the shard number or shard index based on the chunk and the relative fragment offset with that chunk.

In embodiments of the invention comprising a local memory subsystem, the local memory subsystem and the distributes store form different levels of a hierarchical memory structure for memory objects. In such a hierarchical memory structure, lower levels are situated closer to the compute cores and have a lower associated latency compared to higher levels. Hence, the object cache has a lower level than the local memory subsystem, if present, and the local memory subsystem in turn has a lower level than the distributed store. In embodiments of the invention in which a scratchpad memory is placed next to the one or more compute cores, the level of the scratchpad memory is the lowest ranked level in the hierarchical memory structure for memory objects and usually has the shortest associated latency. The level of the distributed store is the highest ranked level in the hierarchical memory structure for memory objects and usually has the longest associated latency. The distributed store is also situated farthest from the compute cores of each compute node in the sense that it is separated from the compute node by a cluster network. Only in exceptional cases, when the compute node provides storage facilities for the distributed store and thus functions also as one of many storage nodes of the distributed store that are accessible over the cluster network, may it happen that the requested memory object fragment is actually located on the same compute node as the object cache that needs to be served.

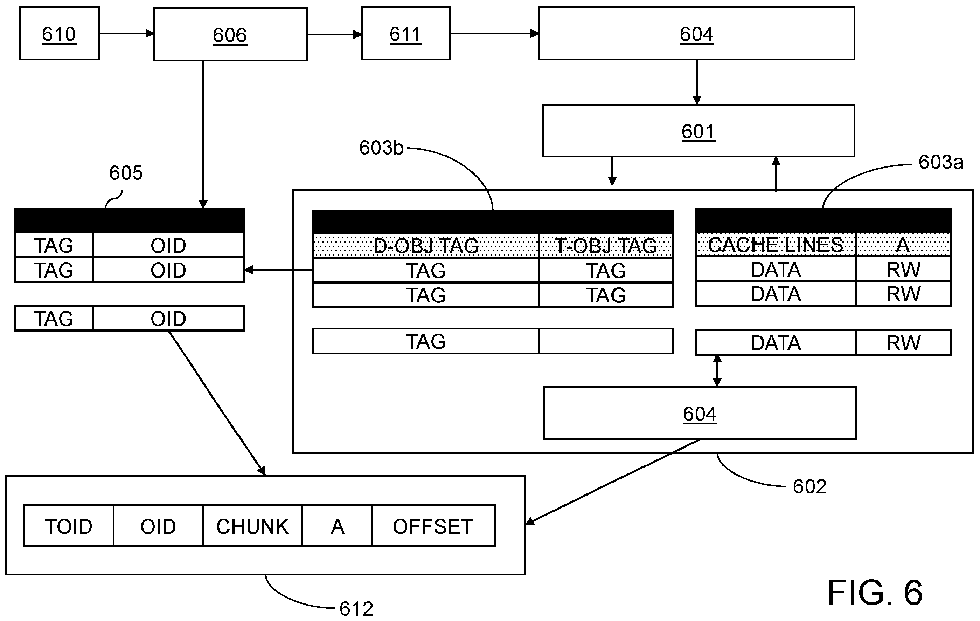

Referring now to FIG. 6, the task handling by the compute core of the compute node and its interaction with the object cache is explained in more detail. User code for execution by one or more compute cores 601 of the compute node is embedded in memory objects 610 of the code type. A runtime manager 606 converts the compiled but not fully linked user code in memory objects 610 into executable instruction code embedded in a series of task objects 611, which are scheduled, e.g. in the form of threads, for execution on a specific compute core 601 of the compute node. Task objects are just another type of memory objects, which contain executable user code (e.g. task objects encapsulate the tasks). In the same way as any memory object, a unique object identifier - a task object identifier or TOID - is assigned by the MOMU to each task memory object. Compiled user code is rendered executable by binding and dynamic linking of references to other memory objects into the user code at runtime. For instance, the OIDs of memory objects upon which the user code depends are dynamically linked by assigning tags to each memory object that is required as an input by the task and inserting the tags into the code. The runtime manager 606 is configured to carry out the assignment of tags to memory objects associated with a task and maintain a dictionary 605 of all tagged memory objects for this task. Not only memory objects that are inputs to the tasks of a task object receive tags but also the tasks themselves. The dictionary 605 keeps track of the tag assignments and is under the control of the runtime manager 606, which makes sure that the relevant associations between tags and memory objects are available at execution time.

In embodiments of the invention, it is more efficient to use smaller-sized tags instead of the larger-sized object identifiers in the instruction code segments. Nonetheless, the tags may be identical to the memory object identifier 'OID' or task object identifier 'TOID' in alternative embodiments of the invention. The compute core 601 and the object cache 602 use the tags when referring to a specific memory object at execution time. The tags are thus virtual and evanescent, and are not used by the MOMU, node-local memory subsystem and distributed store for the purposes of managing and accessing memory objects. The dictionary 605 may be stored in a lookup table which comprises a series of tags that have been allocated by the runtime manager 606 in a first column and the object identifiers of the memory objects to which the tags have been assigned as a second column. Different tags can be assigned to the same memory object. If the lookup table is filled completely but new tags have to be allocated in the dictionary 605, the runtime manager 606 may decide to evict parts of the lookup table and store the evicted parts as memory objects of the system type (e.g. virtual tag subtype) on the distributed store from which they can be reloaded later on. A task scheduled for execution on one of the compute node cores, e.g. a thread of a user process, which is awaiting clearance, may be added to a thread queue. Once the scheduled task or thread has been authorized for execution on the compute core 601, it is placed into an instruction cache 604. The compute core 601 and object cache 602 refer to tasks encapsulated by a task memory object with object identifier 'TOID' by the tag that has been assigned to 'TOID'. In embodiments of the invention, executable instructions must be located in the code chunk of the task-type memory object. Any attempt to execute instruction code from a different chunk such as the data chunk results in an exception. This has the benefit that code injection attacks can be avoided.

Adjacent to the compute core 601, an object cache 602 is provided to temporarily retain memory object fragments that are tasks inputs and thus accessed be the compute core 601 during task execution. The object cache 602 comprises a data memory 603a and a tag memory 603b. The data memory and tag memory 603a, 603b may be provided as separate memory units or may be implemented as different partitions/reserved blocks of one single memory unit (i.e. object cache having a tag block and a data block). The object cache 602 comprises a plurality of cache lines in the data memory 603a, wherein each cache line is configured to hold a fixed-size block of memory object data (data block), e.g. 4kB worth of memory object content compared to 64B wide memory object fragments, as well as two access control bits, A(RW). In alternative embodiments of the invention, the access control bits may be stored in the lines of the tag memory, or even in the block of a separate access memory of the object cache. Moreover, an offset within the logical address space associated with the memory object of which fragments are kept in a cache line of the data memory 603a is typically stored as a start address in a reserved portion of the cache line. When a complete shard of memory object content is to be retained in the object cache, e.g. 64kB worth of memory object content, multiple cache lines of the data memory 603a need to be allocated and each receive a different tag. This implies that different virtual tags can be assigned to the same memory object when different memory regions in the memory object are to be distinguished for unambiguous compute core accesses. Moreover, the tag memory 603b of the object cache 602 is configured to hold tag information for each cache line of the data memory 603a, which tag information allows identification of a unique combination of data-type memory object to be accessed and task-type memory object that is accessing the data-type memory object. This unique pairing of data and task objects is represented by the corresponding unique combination of OID and TOID. In embodiments of the invention, the tag information that is held by the tag memory 603b may be composed of a first tag and a second tag that respectively identify the TOID and the OID of the aforementioned unique combination. The first tag has been assigned previously to a specific task memory object and thence represents this task memory object in compute core and object cache operations at execution time. Likewise, the second tag has been assigned previously to a specific data memory object and thence represents this data memory object in compute core and object cache operations at execution time. Additionally, the first access control bit, A(R), indicates the read permission as currently granted to the unique combination of accessing task object and accessed data object, i.e. the unique TOID/OID combination, and the second access control bit, A(W), indicates the write/modify permission as currently granted to the unique combination of accessing task object and accessed data object. A cache controller 604 of the object cache 602 controls read/write accesses to the object cache, manages the eviction of cache lines in the data memory 603a if data needs to be loaded into an object cache that is full, and manages allocation of cache lines with respect to new, i.e. not yet retained, unique TOID/OID combinations.

Every time the compute core 601 fetches a new thread/cleared task from the instruction cache 604 and requires input data from one or multiple memory objects in order to execute the task, the compute core 601 issues an access command for each data memory object to be accessed to the object cache 602. Each access command from the compute core 601 comprises the intended type of access (e.g. read or write/modify), the respective tags for the tasks memory object's TOID and data memory object's OID, as well as the absolute offset of the fragment in the data memory object that is needed as input for task execution. In embodiment of the invention, the access command may be issued as a long address for access of the specified type, wherein a first bit field in the long address is reserved for the tag related to the TOID, a second bit field is reserved to the tag related to the OID, and the remainder of the long address is allocated to the fragment offset information. The object cache controller 604 is configured to only allows access to a cache line of the data memory 603a if the tag information stored for this cache line (stored in the corresponding line of the tag memory 604b) matches the tag information in the access command from the compute core 601. More specifically, the cache controller 604 may be configured to verify a first correspondence between the TOID-related tag encoded in the access command and the TOID-related first tags that are stored in the tag memory 604b of the object cache 602 and verify a second correspondence between the OID-related tag encoded in the access command and the OID-related second tags that are stored in the tag memory 604b of the object cache 602. Only if both correspondences occur with respect to one and the same cache line, i.e. there is a match for both the first and the second tag for one of the cache lines of the object cache, access to the data retained in this cache line will be allowed by the cache controller 604. In this way, no other task can access a cache line that has not been assigned to its own TOID identifier and memory object data present in this cache line is protected from unauthorized accesses. The object cache controller 604 is also configured to determine the shard offset and the relative fragment offset within the shard, based on the absolute fragment offset contained in the access command from the compute core 601. The cache controller 604 detects a cache miss if the memory object fragment to be accessed is outside of the memory object content that is being held in the cache line of the object cache 602, provided access to this cache line is allowed.

A cache miss policy for the cache controller 604 with regard to an existent TOID/OID combination, present in the object cache 602, preferably includes composing a memory access request message 612 which comprises the unique TOID/OID combination, the access control bits A(RW), and the absolute offset of the missing but requested fragment.

A cache miss policy for the cache controller 604 with regard to a new TOID/OID combination, currently not present in the object cache 602, preferably includes assigning a new line of the data memory 603a of the object cache 602, by marking the line of the data memory 603a with the respective tags for the new TOID/OID combination in the tag memory 603b, and clearing the data block of the assigned cache line. Moreover, a memory access request message 612 is composed, which comprises the unique TOID/OID combination, the values 0x0 (both 'False') for the access control bits A(RW), and the absolute offset of the missing but requested fragment.

An update policy for the cache controller 604 preferably includes clearing the cache lines of the data memory 603a for which either one or both of the TOID represented by the first tag and the OID represented by the second tag in the corresponding line of the tag memory 603b is changed. Moreover, the access control bits, A(RW), of each cache line are set to 0x0 (both logical 'False') each time the cache line is reassigned to a different TOID/OID combination. Upon first access of the reassigned cache line (e.g. by one of the compute cores), the object storage firewall of the compute node determines new values for the access control bits and the cache controller 604 sets the access control bits, A(RW), of the cache line to the new values as determined by the object storage firewall.

In embodiments of the invention, write-back of memory object fragments in the object cache to the distributed store may be implemented by the object cache controller when memory object fragments in an accessed cache line are altered as a result of the access command form the compute core.

When composing the memory access request message, the cache controller 604 initiates a look up and retrieval of the TOID and OID information in the table of the dictionary 605 of tagged memory objects, based on the tag information embedded in the access command from the compute core 601, and waits for a response from the object storage firewall. This response can be either an "Access denied" exception or the requested memory object fragment. The former signifies that the request to read, write or modify the information in the memory object with identifier 'OID' is not allowed for this requester 'TOID' and access has not been allowed by the object storage firewall, while the latter signifies that the memory access has been allowed by the object storage firewall. In some embodiments of the invention, the memory access request message may also contain the chunk of the memory object with object identifier 'OID' in which the missing but requested fragment is located. If the chunk is specified in the request message, the fragment offset may be indicated relative to this chunk. The memory access request message is sent through the MOMU to the distributed store (or is redirected to a local memory subsystem of the compute node), but is intercepted by the object storage firewall for access right verification.

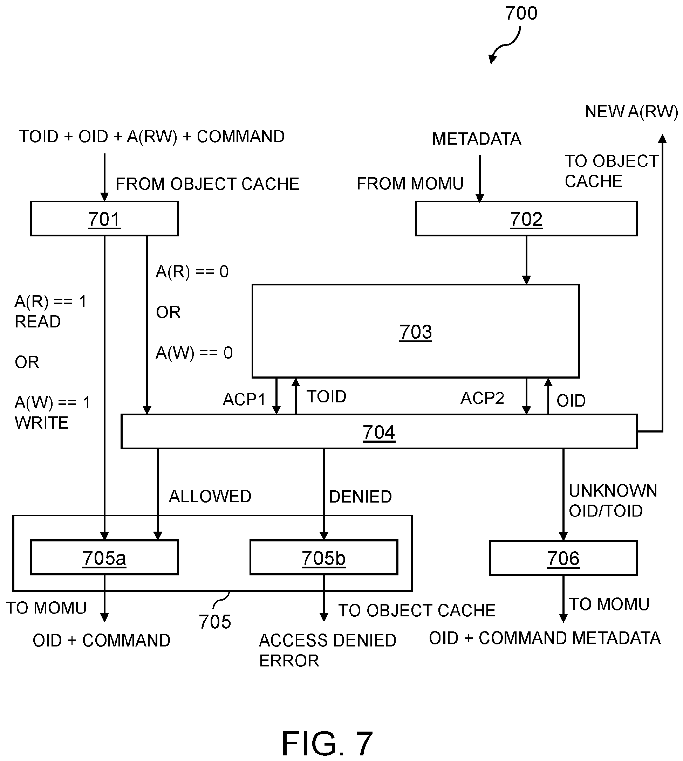

FIG. 7 is a block diagram of the object storage firewall that can be used in compute nodes in accordance with embodiments of the invention. The object storage firewall 700, which may be implemented as software running on dedicated hardware, comprises a firewall gate 701, a metadata update module 702, an access lookup table 703, an access check module 704, a message filter unit 705 comprising a first message builder 705a for accepted messages and a second message builder 705b for rejected messages, and a message builder 706 for metadata requests.

Memory request messages from the object cache of the compute node arrive at the firewall gate 701 of the object storage firewall 700. As explained before, each request message issued by the object cache controller refers to a particular combination of TOID and OID, which means that both the requester and the memory object manipulated by requester are identified in the request. In addition thereto, the type of access for the manipulated memory object and the status of access rights as indicated by the two access control bits, A(R) and A(W), is also embedded into the request for the particular combination of OID and TOID. The firewall gate 701 is configured to verify that the type of memory access embedded in the request (e.g., read, write or modify) agrees with the current settings of the access control bits A(RW) for the particular combination of OID and TOID, which are also embedded in the request message. This includes verifying that the access control bit 'A(R)' for read access to the memory object has 'True' as value, i.e. A(R) = 1, if the type of memory access intended by the received request is a read operation. Similarly, the firewall gate 701 verifies that the access control bit 'A(W)' for write accesses to the memory object has 'True' as value, i.e. A(W) = 1, if the type of memory access intended by the received request is a write or modify operation. The access control bits A(RW) may be set by default to 0x0 (i.e. both bits represent a logical 'False') when the particular combination of OID and TOID is first encountered by the object cache controller and may be modified subsequently by the object storage firewall 700, in accordance with pre-granted access rights and/or granted privileges. Different access privileges may be granted for different access groups.

If the previous conditions are met, then the agreement has been established and the firewall gate 701 passes the request message on to the first message builder 705a of the message filter unit 705. The first message builder 705a may strip off unnecessary or sensitive information in the request message that is not useful to or intended for the distributed store or node-local memory subsystem, e.g. the TOID information and access control bits. The simplified request message is then transmitted to the MOMU, e.g. transmitted via the NoC. However, if the request message fails to meet the aforementioned conditions, i.e. the access control bit for read access to the memory object is A(R) = 0 if the type of memory access intended by the received request is a read operation or the access control bit for write access to the memory object is A(W) = 0 if the type of memory access intended by the received request is a write or modify operation, then no agreement is established and the firewall gate 701 passes the request message on to the access check module 704.

The access check module 704 is coupled to the access lookup table 703 which is configured to store object identifiers (OIDs) alongside with security attributes 'ACP2' for each one of the different OIDs. Similarly, the access lookup table 703 stores task object identifiers (TOIDs) alongside with security attributes 'ACP1' for each one of the different TOIDs. In the access lookup table 703, entries related to OIDs may be stored in a different table or different part of the table than entries related to TOIDs. Upon reception of the request message, the access check module 704 attempts to retrieve the security attributes associated with the memory object to be accessed and the security attributes associated with the requester from the access lookup table 703, based on the OID and TOID that are embedded in the request. If the OID and TOID of the received request match with a respective one of the OIDs and TOIDs stored in the access lookup table 703, the access check module 704 determines whether the memory access command of the request is allowable or should be denied, based on a predetermined set of authorization rules. If the memory access command of the request is allowable, then the access check module 704 passes the request message on to the first message builder 705a of the message filter unit 705. As explained previously, the first message builder 705a may simplify the request message such that it is more adequate for the distributed store or node-local memory subsystem. The simplified request message is then transmitted to the MOMU. Additionally, the access check module 704 determines updated values for the access control bits A(RW) of the object cache and sends them to the object cache controller for storage in the corresponding object cache line. This ensures that a subsequent memory access command with respect to the same combination of OID and TOID passes straight through the firewall gate 701 without further verification by the access check module 704. If the memory access command of the request is not allowed, then the access check module 704 passes the request message on to the second message builder 705b of the message filter unit 705. The second message builder 704b returns an access denial message for the received request as an exception error to the object cache controller. Eventually, the access check module 704 triggers a metadata requests by message builder 706 if either one or both of the embedded OID and TOID of the received request cannot be matched with a respective one of the OIDs and TOIDs stored in the access lookup table 703. The metadata read request for the missing OID/TOID is then dispatched to the MOMU and the request received by the object storage firewall 700 enters a pending state. Once the metadata for the missing OID/TOID has been retrieved from the local memory subsystem of the compute node or the distributed store and sent back to the object storage firewall 700, it is intercepted by the metadata update module 702 which extracts the security attributes associated with the memory object designated by the missing OID/TOID from the relevant portion of the metadata chunk and supplies the extracted security attributes together with the missing OID/TOID to the access lookup table 703, where they are stored as a new table entry. The access lookup table 703 thence remembers the security attributes of the previously unknown OID/TOID combination for future access control checks by the access check module 704 and the access check module 704 can resume the pending request. If no metadata can be found or retrieved, either from the local memory subsystem or the distributed store, the access check module 704 is notified and an exception error is issued by the message builder 705b.

Security attributes related to memory objects - identified by their OID - typically specify access permissions to the memory object as memory resource, and these access permissions may vary from access group to access group. In embodiments of the invention, the security attributes associated with each memory object may be embedded in the memory object itself, e.g. stored in a fixed-size first portion of the metadata chunk of each memory object. Alternatively, a reference to another memory object is embedded in the metadata chunk of the memory object, wherein the former memory object is storing in its metadata chunk the security attributes for the latter memory object. Tasks related to user input, user instructions or user program code typically do not have any granted permission (neither read nor write) for accessing the metadata chunks of memory objects that store the security attributes. Moreover, granted access rights are preferably modified through dedicated access functions of the MOMU. In embodiments of the invention, read requests by a user to the first shard of the metadata chunk (containing the security attributes, only system accessible) may return 0x0 to hide the content from read attempts to this shard that are not properly performed via the dedicated access functions of the MOMU.

Access permissions for a predefined number of distinct access groups may be implemented for each type of memory object, e.g. an owner group, a first security group, a second security group, and a miscellaneous access group. The number of distinct access groups is determined at design time and preferably is small, because the access permissions for the access groups are directly embedded in the memory object metadata and are frequently accessed by the MOMU. The owner group specifies the creator TOID or, in case of change of ownership, the TOID of the current owner of the memory object, as well as the access rights given to the owner of the memory object. Only the current owner of a memory object is allowed to transfer ownership of the memory object and modify the ownership TOID in the metadata chunk of the memory object. The first security group may be assigned by the owner of the memory object to a group of interrelated or interacting tasks and specify the access rights given to this group of tasks. The second security group may be inherited from the task object that created the memory object, unless the root task was the creator, and specify the access rights given to this inherited group of tasks. When the cluster computer with compute nodes is booted, a root task is generated, which is responsible for requesting a new OID for the initial user code (top-level user task) but does not execute the user code itself. The root task also assigns the second security group of each top-level user task. Default access rights given to the different access groups at the time of memory object creation may be as follows: read & write for the owner group, none for the first security group, only read for the second security group, none for the miscellaneous access group. These default access rights have the advantage that they enforce immutability of the underlying memory objects in relation to non-owner tasks, which improves thread safety, coherency between copies of memory object fragments prefetched into the local memory subsystem of a compute node and the original memory object fragment located in the distributed store, and lock-free concurrent read accesses to shared memory objects. Indeed, it is only the owner task that is allowed to read and write to the memory object, whereas all the other tasks that spawned from the same user (top-level user task) are only allowed to read.

As a result, the security attributes associated with each memory object define the subjects (task objects or a group of task objects) that have access to the memory object as memory resource and the type of memory access operations/commands that the subjects are allowed to perform. The security attributes of each access group may be represented as a set or list of access control parameters that include the security group for allowed TOIDs and their granted access permissions. A non-exhaustive list of possible types of access permissions comprises: none, read-only, write only, read & write. Embodiments of the invention, however, are not limited to the particular set of access groups and access permissions of the preceding examples; other access permissions and access groups, or a different number of access groups, may be defined instead.

In the present embodiment, the access lookup table 703 may be configured to store the memory object's security attributes of the owner group, the first and second security group, and the miscellaneous access group for each OID entry in the table, and store the memory object's security attributes of the first security group, second security group, and the miscellaneous access group for each TOID entry in the table. Furthermore, the access check module 704 may be configured to verify the respective access groups as specified by the security attributes for the matched OID against the corresponding access groups as specified by the security attributes for the matched TOID, in order to determine whether the memory access command of the request is allowable or not. If none of the access groups for the matched OID coincides with the respective access group for the matched TOID, then the memory access command is not allowable. If at least one of the access groups for the matched OID coincides with the respective one access group for the matched TOID, then the memory access command is allowable, provided that the granted access permissions for the coinciding access groups warrant the requested type of memory access. The respective access groups for the matched OID may be verified in parallel against the corresponding access groups for the matched TOID. The owner group for the matched OID is simply compared to the matched TOID (being identical to its owner).

In embodiments of the invention, delays due to pending request messages may be reduced or avoided by implementing one or more of the following optimizations:
- whenever a task requests a new OID from the MOMU, the attributed OID and the corresponding security attributes are copied into the access lookup table of the object storage firewall, whereby locally created memory objects for processing on the compute node are already present in the access lookup table of the object storage firewall of that compute node;
- any specific command that aims at an updates of access rights given to a task, such as a change of ownership or a change of access rights, will also cause a corresponding update in the access lookup table of the object storage firewall;
- prefetch commands for memory object fragments will also prefetch the relevant parts of the memory object's metadata (including the security attributes and optionally also the secure key reference for encryption/decryption) and update the access lookup table of the object storage firewall of the compute node, whereby access rights are made available in the access lookup table of the object storage firewall even before a first miss for the memory object occurs in the object cache;
- the local memory subsystem of the compute nodes may be provided with a specific metadata cache for holding the first portions of the metadata chunk (including the security attributes and optionally also the secure key reference for encryption/decryption) for a large number of memory objects.

The following example steps (a) through (n) illustrate how memory objects can be generated and accessed by tasks, which operate on those memory objects, including the assignment of access groups to memory objects, the granting of access permissions and the transfer of memory object ownership:
(a) root task 'RT' requests a new OID for user task 'T1';
(b) MOMU attributes object identifier '123' to task 'T1', viz. TOID(T1) := 123;
(c) 'RT' assigns second security group 'P1' to task '123' with default access rights, e.g. (R+W, none, R, none);
(d) 'RT' launches task '123';
(e) Task '123' requests two new OIDs for child tasks;
   (e1) First child task gets object identifier '456';
   (e2) Task '456' has owner '123', no first security group, 'P1' as second security group and default access rights;
   (e3) Second child task gets object identifier '111';
   (e4) Task '111' has owner '123', no first security group, 'P1' as second security group and default access rights;
(f) Task '123' requests new OID for data object 'D1';
(g) Data object 'D1' gets object identifier '789', viz. OID(D1) := 789;
   (g1) data object '789' has owner '123', no first security group, 'P1' as second security group and default access rights;
(h) Task '123' transfers ownership of data object '789' to task '456';
   (h1) data object '789' has owner '456', no first security group, 'P1' as second security group and default access rights;
   (h2) write access to data object '789' has ceased for task '123';
(i) Task '123' submits task '456' for execution;
(j) Task '123' submits task '111' for execution;
(k) Task '456' requests write access to data object '789';
   (k1) Access check: data object '789' has owner '456' which matches the requester task '456', hence write access granted;
(l) Task '111' requests read access to data object '789';
   (l1) Access check: data object '789' has second security group 'P1' which matches the second security group 'P1' of requester task '111', hence read access granted;
(m) Task '111' requests write access to data object '789';
   (m1) Access check: data object '789' has second security group 'P1' which matches the second security group 'P1' of requester task '111', but read-only permission has been given, hence write access denied;
(n) Hostile task '666' request write access to data object '789';
   (n1) Access check: data object '789' has no match with requester task '666', hence write access denied before any content of '789' is fetched;

The object storage firewall thus enforces access control as an important security measure at the hardware level, which prevents tasks running without read permission to gain insight into contents of memory objects to which they are not supposed to have access, and prevents tasks without write permission to accidentally or intentionally alter contents of memory objects. Moreover, information on default access rights, granted access privileges, memory object ownership and security details can stored in the metadata chunks of the memory objects themselves such that the different compute nodes of the cluster computer can access them on the distributed store. In embodiments of the invention, no operating system intervenes in the previously described aspects on mandatory access control. Users accounts and user-based code can be strictly separated through the access rights mechanisms, because he top-level OID for each user/user code is different and is then inherited in the second security group.

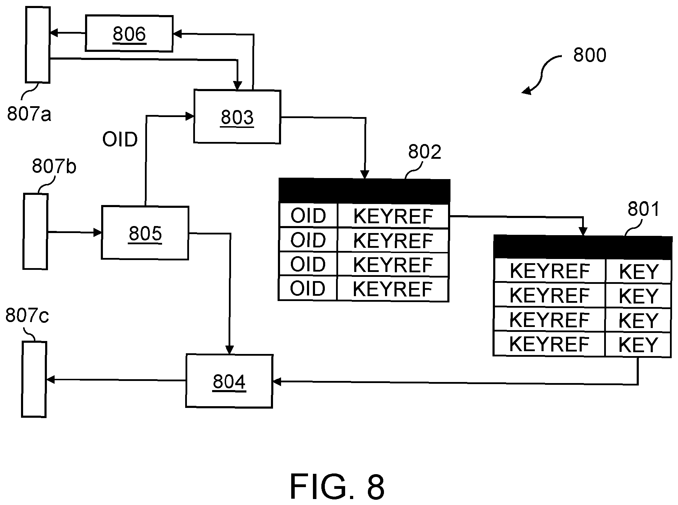

FIG. 8 is a block diagram of the security management unit that can be used in compute nodes in accordance with embodiments of the invention. The security management unit 800 comprises a key storage unit 801, a key reference cache memory unit 802, a metadata-specific cache controller 803, a crypto-engine 804 for encryption and decryption of messages, a message buffer 805 and a message builder 806. The security management unit 800 is coupled to a network-on-chip (NoC) via NoC ports 807a-c. The NoC is the compute node's communication network that is relaying messages between components of the same compute node and, by means of a cluster network interface of the compute node, also enables cluster-wide communication and message exchange between the components of different compute nodes or between the components of a compute node and storage nodes of the distributed store. The use of a NoC as communication network of the compute node is a non-limiting feature of the invention; alternative communication means may be used in different embodiments of the invention.

In the present embodiment, incoming messages or parts thereof, which require encryption or decryption, are received via one of the NoC ports 807b and temporarily held in the message buffer 805. Fragments of the memory object that are targeted by a memory access are embedded in the message body and the OID of the corresponding memory object is also present in the message. The message buffer is configured to extract the OID from the buffered message and send it to the metadata-specific cache controller 803. Combinations of different OIDs and their corresponding references to secure keys 'KEYREF' are retained in respective lines of the key reference cache memory unit 802. The cache controller 803 is configured to verify whether the extracted OID from the message buffer 805 is already present in the key reference cache memory unit 802. If a match is found, the cache controller 803 retrieves the reference to the secure key that corresponds to the extracted OID from the message buffer. If no match is found, the cache controller 803 notifies the message builder 806 about the not matching OID. The message builder 806 is configured to generate a metadata access command for the not matching OID and wrap it into a request message, i.e. access to the first portion of the metadata chunk of the memory object with the not matching OID is requested. The request message is sent to the MOMU of the compute node and leaves the security management unit 800 through the NoC port 807a. It is this first portion of the metadata chunk of each memory object that contains the reference to one of the secure digital keys stored in and managed by the security management unit. As the first portion of the metadata chunk of each memory object preferably has the same size, the corresponding fragment offsets do not have to be explicitly specified in the request message. The explicit specification of these fragment offsets may be carried out by the MOMU of the compute node. Once the MOMU has received the first portion of the metadata chunk with secure key reference for the requested memory object corresponding to the not matching OID from the distributed store, it redirects the response message to the security management unit 800. This response reaches the cache controller 803 via the NoC port 807a, which in turn is configured to extract the key reference that is embedded in the first portion of the metadata chunk (typically not encrypted) for the response message and allocate a line of the key reference cache memory unit 802 for storing the new combination of OID and key reference 'OID | KEYREF' in the key reference cache memory unit 802. As a result, even for a cache miss in the key reference cache memory unit 802, the missing combination of OID and secure key reference 'OID | KEYREF' can be fetched from the distributed store and placed into the key reference cache memory unit 802. Therefore, the reference to the secure key 'KEYREF' corresponding to the extracted OID from the message buffer can eventually be read out from the key reference cache memory unit 802 and transmitted to the key storage unit 801. The key storage unit 801 is configured to store and manage entries into a key table, which key table is preferably stored in a tamper-proof way in the security management unit 800. Each entry into the key table contains a secure digital key 'KEY' and a reference to this key 'KEYREF'. Based on a key reference as query parameter, the corresponding key in the key table of the key storage unit 801 can be looked up and retrieved. The retrieved secure key 'KEY' is then passed to the crypto-engine 804 for the purpose of encrypting or decrypting the message that is held in the message buffer 805. The crypto-engine 804 is configured to carry out the steps of a key-based encryption/decryption algorithm, e.g. symmetric-key encryption by means of stream or block ciphers, e.g. according to the AES or DES specifications.

In embodiments of the invention, different memory objects may be associated with different key references or the same key reference. Therefore, different types of memory objects may be encrypted in different ways. Moreover, the key reference in the metadata chunk of the memory object may be updated or modified dynamically, such that the encryption format for the same memory object may be adapted over time.

It is an advantage of embodiments of the invention that each memory objects contains information about its own encryption details. It is more secure to include and modify key references within the metadata chunks of the memory objects rather than the secure keys themselves. The secure keys then do not leave the secured environment of the security management units of the different compute nodes, e.g. are not exported to external storage devices that form part of the distributed store and which may be compromised more easily under an evil-minded attack. In embodiments of the invention, it may also be more resource-friendly to store smaller-sized key references compared to larger-seized secure keys in the metadata chunks of memory objects.

In embodiments of the invention, secure keys may be generated in by the security management units of the different computes nodes of the cluster computer, thus achieving distributed key generation in secure environments. Furthermore, secure key may be exchanged between and shared by the security management units of all the compute nodes of the cluster computer. The exchange of secure keys is encrypted or key exchange mechanisms that are known in the art can be used, which agree on a common secret. This ensures that each compute node of the cluster computer is capable of encrypting and decrypting memory contents of the distributed store as the global main memory of the cluster computer on a per-memory object basis.

The invention also relates to a multi-node multiprocessing computer for high-performance computing applications. The multiprocessing computer - a cluster computer - comprises a plurality of compute nodes according to embodiments of the first aspect of the present invention and the distributed store as computer main memory. The compute nodes have the advantage of being highly scalable base units for assembling the supercomputer. Here, multiprocessing relates to the parallel execution of more than one computer program, e.g. application processes or user programs, and the resources required therefor. Each process may create one or multiple threads, which are smaller executable entities related to the process that typically share the same memory resources. Moreover, a task typically refers to a unit of work being executed, whereas a process rather specifies what needs to be done, independently of it "being done" right now. In embodiments, a small operating system may be provided that performs thread handling (e.g. FreeRTOS).

In the cluster computer, the multiple compute nodes are operatively connected through a communication network, i.e., form a set of interconnected network nodes. The communication network typically comprises a node-internal communication subsystem, e.g. a network-on-chip, and an intra-node communication subsystem, e.g., ethernet network and/or optical fiber communication network. The compute nodes all have a network interface module and can be addressed by a portion of the network address. Node-internal components can all be reached via full network addresses.

The distributed computer main memory is provided by a plurality of storage nodes that each comprise at least one memory units for distributed memory object storage, e.g. DRAM-based or SSD-based memory modules. The plurality of storage nodes may be distributed over a plurality of locations, i.e., form a computer main memory that is decentralized. Access to the distributed memory units is controlled independently for each storage node by a local memory controller. In particular embodiments of the invention, the memory units composing the disaggregated computer main memory are all assembled into the compute nodes of the cluster computer and the compute nodes also act as storage nodes. In such embodiments, each compute node may contain at least one memory unit as a fraction of the global disaggregated computer memory. In other embodiments of the invention, the storage nodes of the cluster computer are different from the compute nodes of the cluster computer. In yet other embodiments, the disaggregated computer memory of the cluster computer may be composed of a mix of independent storage nodes with dedicated memory units and compute nodes that also act as storage nodes (e.g. integrating a memory unit of the global distributed store).

In embodiments of the invention, stored fragments of each individual memory object are scattered over the whole distributed store as global computer main memory, e.g. distributed in a random and uniform manner over the physical address space associated with the global computer main memory. The MOMU of each compute node can quickly compute the physical memory address corresponding to memory fragments accessed by the compute cores of that same compute node and thus gather memory object fragments that are scattered over a large number of remote store nodes in a node-local prefetch memory (local memory subsystem of the compute node). Stored memory object fragments can also be shared among multiple tasks that are executed by compute cores belonging to different compute nodes. Tasks executed on one compute node generate memory objects that normally cannot be accessed on the distributed store through MOMUs of different compute nodes, because their respective OIDs are dependent on the compute node and will not be known by other compute nodes. However, compute nodes may still exchange OID information in the context of shared memory resources over the communication network. OIDs may be shared just like any data, i.e. the value of an OID is an output from one task and input for another task. In order to access memory object content on a different compute node than the compute node that first created this memory object, the object storage firewall of the different compute node first has to verify that the correct access rights have been granted. For instance, read permissions may be granted for a pool of tasks that have been assigned to the same first security group, irrespective of the compute nodes cores that are actually executing the tasks. If no or insufficient/wrong access right have been granted, the access will be denied. Typically only the creator/owner task of an OID can write, while others have read access. Software locks may be used to handle write permissions set by the programmer.

As described previously, the compute nodes composing the supercomputer may each contain an object cache memory that is storing memory objects, or relevant parts thereof, at the node-level. Even though it is feasible to maintain more than one local copy of a memory object, or fragments thereof, in a corresponding number of compute nodes, not every compute node is allowed to modify or write into a memory object that is a shared resource. More specifically, only the node-bound creator task that caused the generation of the memory object as shared resource may have the rights to alter the contents of the memory object, while tasks that are not native to the node are lacking these rights. Tasks running on different nodes may still be able to read information content of shared memory objects that are stored in the local object cache memory. Typically, no consumer task is spawned while a producer task is running on the same object (data dependency check in task graph), such that a programming model for this computer architecture is capable of anticipating write inconsistencies in shared memory objects.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. An object-based compute node for a multi-node multiprocessing computer, comprising:
at least one compute core for executing tasks requiring fragments of one or more memory objects as inputs, each memory object being assigned an object identifier (OID) and composed of a plurality of fragments accessible on a distributed store, and each task being encapsulated in a task object as particular type of memory object and assigned a task object identifier (TOID), wherein the at least one compute core is configured to access the fragments of each memory object through offsets in a contiguous logical address space associated with the memory object;
an object management unit for mapping logical addresses of memory object fragments to physical addresses of storage locations within the distributed store, said distributed store being a main memory for the compute node, the object management unit being configured to calculate the physical address for each memory object fragment from a combination of the corresponding object identifier (OID) and fragment offset within the logical address space associated with the memory object;
an object cache interposed between the at least one compute core and the object management unit, the object cache comprising an object cache controller, a plurality of cache lines for holding the memory object fragments to be accessed by the at least one compute core, and a cache tag memory for storing a first and second identification tag for each cache line, said first identification tag representing the task object identifier (TOID) of a task scheduled for execution on the at least one compute core and said second identification tag representing the object identifier (OID) of the memory object which is input to said task scheduled for execution on the at least one compute core;
wherein the object cache controller is configured to verify a first correspondence between the task object identifier (TOID) of a task being executed on the at least one compute core and one of said first identification tags stored in the cache tag memory and a second correspondence between the object identifier (OID) of a memory object which is input to said task being executed on the at least one compute core and one of said second identification tags stored in the cache tag memory, and allow access to one of the cache lines provided that a verification of the first and second correspondences has been successful for that cache line.

2. The compute node of claim 1, further comprising an object storage firewall operatively coupled to the object cache and the object management unit,
wherein each cache line of the object cache comprises access control bits with respect to different types of access to memory objects and the object cache controller is further configured to send requests for memory object fragments to the object storage firewall, each request including the fragment offset, the task object identifier (TOID) and the object identifier (OID) respectively represented by the first and the second identification tag stored in the cache tag memory with respect to one of the cache lines, and the access control bits for that cache line,
wherein the object storage firewall is configured to:
determine the type of access included in the request from the object cache controller,
verify that the type of access agrees with a value of the access control bit corresponding to said type of access and included in the request from the object cache controller,
generate an error message for the object cache controller if no agreement between the type of access agrees and the value of the access control bit is established, said error message denying access to the memory object identified by the object identifier (OID) included in the request from the object cache controller by the task identified by the task object identifier (TOID) included in the request from the object cache controller.

3. The compute node of claim 2, the object storage firewall further comprising an access lookup table for storing object identifiers (OID) in conjunction with a first set of security attributes associated with each object identifier (OID) and storing task object identifiers (TOID) in conjunction with a second set of security attributes associated with each task object identifier (TOID),
wherein each of said first and second set of security attributes defines access permissions for at least one access group,
wherein each memory object contains a metadata portion storing access permissions with respect to the at least one access group,
wherein the object storage firewall is configured to:
retrieve the first and second set of security attributes from the access lookup table, based on the task object identifiers (TOID) and the object identifier (OID) included in said request from the object cache controller and, if a retrieval is successful, compare access permissions defined by the first set of security attributes to access permissions defined by the second set of security attributes,
update the access control bits of the cache line targeted by said request if the access permissions defined by the first set of security attributes corresponds to the access permission defined by the second set of security attributes, and
send a read request for memory object metadata to the object management unit if the retrieval of either one or both of the first and second set of security attributes from the access lookup table is unsuccessful, said read request for memory object metadata including the task object identifiers (TOID) and the object identifier (OID).

4. The compute node according any one of claims 1 to 3, further comprising an instruction cache for holding instructions of tasks objects awaiting execution by the at least one compute core, the instruction cache being configured for assigning the task object identifier (TOID) of each task objects awaiting execution by the at least one compute core as an identification tag to the instructions of the tasks object awaiting execution.

5. The compute node according to any one of the preceding claims, further comprising a security management unit for encrypting and decrypting memory object fragments exchanged between the compute node and the distributed store, using a secure key stored in a key table of the security management unit, wherein the metadata portion of each memory object contains a key reference to one of the secure keys stored in the key table of the security management unit and the security management unit is configured to select a secure key from the key table, based on the key reference contained in the metadata portion of the memory objects.

6. The compute node according to claim 5, further comprising a network interface for connecting the compute node to a computer network, the distributed store being accessible to the compute node via said computer network, wherein the security management unit is further configured to encrypt and decrypt messages sent over the computer network, using a network-wide session key.

7. The compute node according to any one of the preceding claims, further comprising a node-local storage unit as a part of the distributed store, the remainder of the distributed store being external to the compute node.

8. The compute node according to any one of the preceding claims, further comprising a node-local memory subsystem, the object cache being operatively coupled through the node-local memory subsystem to the distributed store.

9. A cluster computer comprising a global main memory and a plurality of compute nodes according to any one of the preceding claims, said plurality of compute nodes being operatively connected to each other and to the global main memory through a communication network, wherein the global main memory corresponds to the distributed store.

10. A method of operating the compute node of any one of claims 1 to 8, the method comprising the steps of:
scheduling a plurality of tasks for execution by the at least one compute core, each task being encapsulated in a task object as particular type of memory object and requiring fragments of one or more memory objects as inputs and each memory object being composed of a plurality of fragments accessible on a distributed store, wherein storage locations within the distributed store are referenced by physical addresses, and the at least one compute core is configured to access the fragments of each memory object through offsets in a contiguous logical address space associated with the memory object;
assigning a unique task object identifier (TOID) to each task scheduled for execution and assigning a unique object identifier (OID) to each memory object required as input to one of the tasks scheduled for execution;
marking cache lines of the object cache with first and second identification tags in the cache tag memory of the object cache, thus obtaining tagged cache lines, the first identification tag and the second identification tag for each tagged cache line representing the task object identifier (TOID) of a specific task of the tasks scheduled for execution and the object identifier (OID) of one of the memory objects which is input to said specific task, respectively;
executing, on the at least one compute core, a task of said plurality of tasks scheduled for execution;
verifying a first correspondence between the task object identifier (TOID) of the task being executed on the at least one compute core and one of said first identification tags stored in the cache tag memory of the object cache;
verifying a second correspondence between the object identifier (OID) of the memory object which is input to the task being executed on the at least one compute core and one of said second identification tags stored in the cache tag memory;
granting access to a cache line of the object cache provided that the steps of verifying the first and second correspondence has been successful for that cache line.

11. The method of claim 10, further comprising the steps of:
storing access control bits with respect to different types of access to memory objects in each cache line of the object cache;
sending requests for missing memory object fragments to an object storage firewall of the compute node, each request including the fragment offset, the task object identifier (TOID) and the object identifier (OID) respectively represented by the first and the second identification tag stored in the cache tag memory with respect to the cache line in which the memory objects are missing, and the access control bits for that cache line;
wherein the object storage firewall performs the steps of:
determining the type of access included in the request from the object cache controller;
verifying that the type of access agrees with a value of the access control bit corresponding to said type of access and included in the request from the object cache controller;
generating an error message if no agreement between the type of access agrees and the value of the access control bit is established, said error message denying access to the memory object identified by the object identifier (OID) included in the request from the object cache controller by the task identified by the task object identifier (TOID) included in the request from the object cache controller.

12. The method of claim 11, further comprising the steps of:
storing access permissions with respect to at least one access group in a metadata portion of each memory object;
storing object identifiers (OID) in conjunction with a first set of security attributes associated with each object identifier (OID) in an access lookup table of the object storage firewall and storing task object identifiers (TOID) in conjunction with a second set of security attributes associated with each task object identifier (TOID) in the access lookup table of the object storage firewall, wherein each of said first and second set of security attributes defines access permissions for at least one access group;
retrieving the first and second set of security attributes from the access lookup table of the object storage firewall, based on the task object identifiers (TOID) and the object identifier (OID) included in said request from the object cache controller and, if a retrieval is successful, comparing access permissions defined by the first set of security attributes to access permissions defined by the second set of security attributes;
updating the access control bits of the cache line targeted by said request from the object cache controller if the access permissions defined by the first set of security attributes corresponds to the access permission defined by the second set of security attributes;
sending a read request for memory object metadata to the object management unit if the retrieval of either one or both of the first and second set of security attributes from the access lookup table of the object storage firewall is unsuccessful, said read request for memory object metadata including the task object identifiers (TOID) and the object identifier (OID).

13. The method of any one of claims 10 to 12, further comprising the steps of:
storing one or more secure keys in a key table of the compute node;
including a key reference to one of the secure keys stored in the key table in a metadata structure of each memory object;
encrypting and decrypting memory object fragments exchanged between the compute node and the distributed store, using the secure key from the key table referenced in the metadata structure of the memory object.

## Patentansprüche

1. Ein objektbasierter Rechenknoten für einen Mehrprozessor-Computer mit mehreren Knoten, umfassend:
mindestens ein Rechenkern zur Ausführung von Aufgaben, die Fragmente von einem oder mehreren Speicherobjekten als Eingaben erfordern, wobei jedem Speicherobjekt eine Objektkennung (OID) zugewiesen ist und es aus einer Vielzahl von Fragmenten besteht, die über einen verteilten Speicher zugänglich sind, und jede Aufgabe in einem Aufgabenobjekt als einem bestimmten Typ von Speicherobjekt gekapselt ist und eine Aufgabenobjektkennung (TOID) zugewiesen bekommt, wobei der mindestens eine Rechenkern konfiguriert ist, um auf die Fragmente jedes Speicherobjekts über Offsets in einem zusammenhängenden logischen Adressraum zuzugreifen, der dem Speicherobjekt zugeordnet ist;
eine Objektverwaltungseinheit zum Abbilden logischer Adressen von Speicherobjektfragmenten auf physische Adressen von Speicherorten innerhalb des verteilten Speichers, wobei der verteilte Speicher ein Hauptspeicher des Rechenknotens ist, wobei die Objektverwaltungseinheit konfiguriert ist, um die physische Adresse für jedes Speicherobjektfragment aus einer Kombination der entsprechenden Objektkennung (OID) und des Fragment-Offsets innerhalb des dem Speicherobjekt zugeordneten logischen Adressraums zu berechnen;
einen Objekt-Zwischenspeicher, der zwischen dem mindestens einen Rechenkern und der Objektverwaltungseinheit eingesetzt ist, wobei der Objekt-Zwischenspeicher eine Objekt-Zwischenspeicher-Steuereinheit, eine Vielzahl von Zwischenspeicher-Zeilen zum Halten der Speicherobjektfragmente, auf die der mindestens eine Rechenkern zugreifen soll, und einen Zwischenspeicher-Tag-Speicher zum Speichern eines ersten und eines zweiten Identifikations-Tags für jede Zwischenspeicher-Zeile umfasst, wobei das erste Identifikations-Tag die Aufgabenobjektkennung (TOID) einer Aufgabe darstellt, die zur Ausführung auf dem mindestens einen Rechenkern geplant ist, und das zweite Identifikations-Tag die Objektkennung (OID) des Speicherobjekts darstellt, das in die zur Ausführung in dem mindestens einen Rechenkern geplante Aufgabe eingegeben wird;
wobei die Objekt-Zwischenspeicher-Steuereinheit konfiguriert ist, um eine erste Übereinstimmung zwischen der Aufgabenobjektkennung (TOID) einer Aufgabe, die auf dem mindestens einen Rechenkern ausgeführt wird, und einem der ersten Identifikations-Tags, die im Zwischenspeicher-Tag-Speicher gespeichert sind, und eine zweite Übereinstimmung zwischen der Objektkennung (OID) eines Speicherobjekts, das in die auf dem mindestens einen Rechenkern auszuführende Aufgabe eingegeben wird, und einem der zweiten Identifikations-Tags, die im Zwischenspeicher-Tag-Speicher gespeichert sind, zu überprüfen und den Zugriff auf eine der Zwischenspeicher-Zeilen ermöglicht, sofern eine Überprüfung der ersten und zweiten Übereinstimmung für diese Zwischenspeicher-Zeile erfolgreich war.

2. Der Rechenknoten nach Anspruch 1, weiter umfassend eine Objektspeicher-Firewall, die mit dem Objekt-Zwischenspeicher und der Objektverwaltungseinheit wirkgekoppelt ist,
wobei jede Zwischenspeicher-Zeile des Objekt-Zwischenspeichers Zugriffssteuer-Bits in Bezug auf verschiedene Arten des Zugriffs auf Speicherobjekte umfasst und die Objekt-Zwischenspeicher-Steuereinheit weiter konfiguriert ist, um Anfragen für Speicherobjektfragmente an die Objektspeicher-Firewall zu senden, wobei jede Anfrage den Fragment-Offset, die Aufgabenobjektkennung (TOID) und die Objektkennung (OID) beinhaltet, die jeweils durch das erste und das zweite Identifikations-Tag dargestellt werden, das im Zwischenspeicher-Tag-Speicher in Bezug auf eine der Zwischenspeicher-Zeilen gespeichert ist, und die Zugriffssteuer-Bits für diese Zwischenspeicher-Zeile,
wobei die Objektspeicher-Firewall konfiguriert ist, um:
den Zugriffstyp zu bestimmen, der in der Anfrage der Objekt-Zwischenspeicher-Steuereinheit beinhaltet ist,
zu überprüfen, ob der Zugriffstyp mit dem Wert des Zugriffssteuer-Bits übereinstimmt, der dem Zugriffstyp entspricht und in der Anfrage der Objekt-Zwischenspeicher-Steuereinheit beinhaltet ist,
eine Fehlermeldung für die Objekt-Zwischenspeicher-Steuereinheit zu generieren, wenn keine Vereinbarung zwischen dem Zugriffstyp und dem Wert des Zugriffssteuer-Bits aufgebaut wird, wobei die Fehlermeldung den Zugriff auf das Speicherobjekt, das durch die Objektkennung (OID), die in der Anfrage von der Objekt-Zwischenspeicher-Steuereinheit beinhaltet ist, durch die Aufgabenobjektkennung (TOID) die in der Anfrage von der Objekt-Zwischenspeicher-Steuereinheit beinhaltet ist, verweigert.

3. Der Rechenknoten nach Anspruch 2, wobei die Objektspeicher-Firewall weiter eine Zugriffsnachschlagetabelle zum Speichern von Objektkennungen (OID) in Verbindung mit einem ersten Satz von Sicherheitsattributen umfasst, die jeder Objektkennung (OID) zugeordnet sind, und zum Speichern von Aufgabenobjektkennungen (TOID) in Verbindung mit einem zweiten Satz von Sicherheitsattributen, die jeder Aufgabenobjektkennung (TOID) zugeordnet sind,
wobei jeder des ersten und zweiten Satzes von Sicherheitsattributen Zugriffsberechtigungen für mindestens eine Zugriffsgruppe definiert,
wobei jedes Speicherobjekt einen Metadatenabschnitt enthält, der Zugriffsberechtigungen in Bezug auf mindestens eine Zugriffsgruppe speichert,
wobei die Objektspeicher-Firewall konfiguriert ist, um:
den ersten und zweiten Satz von Sicherheitsattributen basierend auf den Aufgabenobjektkennungen (TOID) und der Objektkennung (OID), die in der Anfrage von der Objekt-Zwischenspeicher-Steuereinheit beinhaltet sind, aus der Zugriffsnachschlagetabelle abzurufen, und, bei erfolgreichem Abruf die durch den ersten Satz von Sicherheitsattributen definierten Zugriffsberechtigungen mit den durch den zweiten Satz von Sicherheitsattributen definierten Zugriffsberechtigungen zu vergleichen,
die Zugriffssteuer-Bits der von der Anfrage betroffenen Zwischenspeicher-Zeile zu aktualisieren, wenn die durch den ersten Satz von Sicherheitsattributen definierten Zugriffsberechtigungen den durch den zweiten Satz von Sicherheitsattributen definierten Zugriffsberechtigungen entsprechen, und
eine Leseanforderung für Speicherobjektmetadaten an die Objektverwaltungseinheit zu senden, wenn das Abrufen eines oder beider des ersten und zweiten Satzes von Sicherheitsattributen aus der Zugriffsnachschlagetabelle fehlschlägt, und die Leseanforderung für Speicherobjektmetadaten die Aufgabenobjektkennungen (TOID) und die Objektkennung (OID) beinhaltet.

4. Der Rechenknoten nach einem der Ansprüche 1 bis 3, weiter umfassend einen Anweisungszwischenspeicher zum Halten von Anweisungen von Aufgabenobjekten, die auf die Ausführung durch den mindestens einen Rechenkern warten, wobei der Anweisungszwischenspeicher konfiguriert ist, um die Aufgabenobjektkennung (TOID) jedes Aufgabenobjekts, das auf die Ausführung durch den mindestens einen Rechenkern wartet, als Identifikations-Tag den Anweisungen des auf die Ausführung wartenden Aufgabenobjekts zuzuweisen.

5. Der Rechenknoten nach einem der vorstehenden Ansprüche, weiter umfassend eine Sicherheitsverwaltungseinheit zum Ver- und Entschlüsseln von Speicherobjektfragmenten, die zwischen dem Rechenknoten und dem verteilten Speicher ausgetauscht werden, unter Verwendung eines in einer Schlüsseltabelle der Sicherheitsverwaltungseinheit gespeicherten sicheren Schlüssels, wobei der Metadatenabschnitt jedes Speicherobjekts eine Schlüsselreferenz auf einen der in der Schlüsseltabelle der Sicherheitsverwaltungseinheit gespeicherten sicheren Schlüssel enthält und die Sicherheitsverwaltungseinheit konfiguriert ist, um basierend auf der im Metadatenabschnitt der Speicherobjekte enthaltenen Schlüsselreferenz einen sicheren Schlüssel aus der Schlüsseltabelle auszuwählen.

6. Der Rechenknoten nach Anspruch 5, weiter umfassend eine Netzwerkschnittstelle zum Verbinden des Rechenknotens mit einem Computernetzwerk, wobei der verteilte Speicher über das Computernetzwerk für den Rechenknoten zugänglich ist, wobei die Sicherheitsverwaltungseinheit weiter konfiguriert ist, um über das Computernetzwerk gesendete Nachrichten unter Verwendung eines Netzwerkweiten Sitzungsschlüssels zu verschlüsseln und zu entschlüsseln.

7. Der Rechenknoten nach einem der vorstehenden Ansprüche, weiter umfassend eine knotenlokale Speichereinheit als Teil des verteilten Speichers, wobei der restliche verteilte Speicher außerhalb des Rechenknotens liegt.

8. Der Rechenknoten nach einem der vorstehenden Ansprüche, weiter umfassend ein knotenlokales Speichersubsystem, wobei der Objekt-Zwischenspeicher über das knotenlokale Speichersubsystem mit dem verteilten Speicher wirkgekoppelt ist.

9. Ein Cluster-Computer, umfassend einen globalen Hauptspeicher und eine Vielzahl von Rechenknoten nach einem der vorstehenden Ansprüche, wobei die Vielzahl der Rechenknoten über ein Kommunikationsnetzwerk miteinander und mit dem globalen Hauptspeicher wirkverbunden ist, und wobei der globale Hauptspeicher dem verteilten Speicher entspricht.

10. Ein Verfahren zum Betreiben des Rechenknotens nach einem der Ansprüche 1 bis 8, wobei das Verfahren die Schritte umfasst zum:
Planen einer Vielzahl von Aufgaben zur Ausführung durch den mindestens einen Rechenkern, wobei jede Aufgabe in einem Aufgabenobjekt als bestimmter Typ von Speicherobjekt gekapselt ist, und Fragmente eines oder mehrerer Speicherobjekte als Eingaben erfordert, und jedes Speicherobjekt aus einer Vielzahl von Fragmenten besteht, die über einen verteilten Speicher zugänglich sind, wobei Speicherorte innerhalb des verteilten Speichers durch physische Adressen referenziert werden und der mindestens eine Rechenkern konfiguriert ist, um auf die Fragmente jedes Speicherobjekts über Offsets in einem zusammenhängenden logischen Adressraum zuzugreifen, der dem Speicherobjekt zugeordnet ist;
Zuweisen einer eindeutigen Aufgabenobjektkennung (TOID) zu jeder zur Ausführung geplanten Aufgabe und Zuweisen einer eindeutigen Objektkennung (OID) zu jedem Speicherobjekt, das als Eingabe für eine der zur Ausführung geplanten Aufgaben erforderlich ist;
Markieren von Zwischenspeicher-Zeilen des Objekt-Zwischenspeichers mit ersten und zweiten Identifikations-Tags im Zwischenspeicher-Tag-Speicher des Objekt-Zwischenspeichers, wodurch markierte Zwischenspeicher-Zeilen erhalten werden, wobei das erste Identifikations-Tag und das zweite Identifikations-Tag für jede markierte Zwischenspeicher-Zeile jeweils die Aufgabenobjektkennung (TOID) einer bestimmten Aufgabe der zur Ausführung geplanten Aufgaben und die Objektkennung (OID) eines der Speicherobjekte darstellt, das in diese bestimmte Aufgabe eingegeben wird;
Ausführen einer Aufgabe der Vielzahl von zur Ausführung geplanten Aufgaben auf dem mindestens einen Rechenkern;
Überprüfen einer ersten Übereinstimmung zwischen der Aufgabenobjektkennung (TOID) der Aufgabe, die auf dem mindestens einen Rechenkern ausgeführt wird, und einem der ersten Identifikations-Tags, die im Zwischenspeicher-Tag-Speicher des Objekt-Zwischenspeichers gespeichert sind;
Überprüfen einer zweiten Übereinstimmung zwischen der Objektkennung (OID) des Speicherobjekts, das in die von dem mindestens einen Rechenkern ausgeführte Aufgabe eingegeben wird, und einem der im Zwischenspeicher-Tag-Speicher gespeicherten zweiten Identifikations-Tags;
Gewähren von Zugriff auf eine Zwischenspeicher-Zeile des Objekt-Zwischenspeichers, sofern die Schritte zum Überprüfen der ersten und zweiten Übereinstimmung für diese Zwischenspeicher-Zeile erfolgreich waren.

11. Das Verfahren nach Anspruch 10, weiter die Schritte umfassend zum:
Speichern von Zugriffssteuer-Bits in Bezug auf verschiedene Zugriffstypen auf Speicherobjekte in jeder Zwischenspeicher-Zeile des Objekt-Zwischenspeichers;
Senden von Anfragen für fehlende Speicherobjektfragmente an eine Objektspeicher-Firewall des Rechenknotens, wobei jede Anfrage den Fragment-Offset, die Aufgabenobjektkennung (TOID) und die Objektkennung (OID) beinhaltet, die jeweils durch das erste und das zweite Identifikations-Tag dargestellt werden, das im Zwischenspeicher-Tag-Speicher in Bezug auf die Zwischenspeicher-Zeile, in der die Speicherobjekte fehlen, und die Zugriffssteuer-Bits für diese Zwischenspeicher-Zeile;
wobei die Objektspeicher-Firewall die Schritte durchführt zum:
Bestimmen des Zugriffstyps, der in der Anfrage der Objekt-Zwischenspeicher-Steuereinheit beinhaltet ist;
Überprüfen, ob der Zugriffstyp mit dem Wert des Zugriffssteuer-Bits übereinstimmt, der dem Zugriffstyp entspricht und in der Anfrage der Objekt-Zwischenspeicher-Steuereinheit beinhaltet ist;
Generieren einer Fehlermeldung, wenn keine Vereinbarung zwischen dem Zugriffstyp und dem Wert des Zugriffssteuer-Bits aufgebaut wird, wobei die Fehlermeldung den Zugriff auf das Speicherobjekt, das durch die Objektkennung (OID), die in der Anfrage von der Objekt-Zwischenspeicher-Steuereinheit beinhaltet ist, durch die Aufgabenobjektkennung (TOID) die in der Anfrage von der Objekt-Zwischenspeicher-Steuereinheit beinhaltet ist, verweigert.

12. Das Verfahren nach Anspruch 11, weiter umfassend die Schritte zum:
Speichern von Zugriffsberechtigungen in Bezug auf mindestens eine Zugriffsgruppe in einem Metadatenabschnitt jedes Speicherobjekts;
Speichern von Objektkennungen (OID) in Verbindung mit einem ersten Satz von Sicherheitsattributen, die jeder Objektkennung (OID) zugeordnet sind, in einer Zugriffsnachschlagetabelle der Objektspeicher-Firewall und Speichern von Aufgabenobjektkennungen (TOID) in Verbindung mit einem zweiten Satz von Sicherheitsattributen, die jeder Aufgabenobjektkennung (TOID) zugeordnet sind, in der Zugriffsnachschlagetabelle der Objektspeicher-Firewall, wobei jeder der beiden Sätze von Sicherheitsattributen Zugriffsberechtigungen für mindestens eine Zugriffsgruppe definiert;
Abrufen des ersten und zweiten Satzes von Sicherheitsattributen basierend auf den Aufgabenobjektkennungen (TOID) und der Objektkennung (OID), die in der Anfrage von der Objekt-Zwischenspeicher-Steuereinheit beinhaltet sind, aus der Zugriffsnachschlagetabelle der Objektspeicher-Firewall, und, bei erfolgreichem Abruf Vergleichen der durch den ersten Satz von Sicherheitsattributen definierten Zugriffsberechtigungen mit den durch den zweiten Satz von Sicherheitsattributen definierten Zugriffsberechtigungen;
Aktualisieren der Zugriffssteuer-Bits der von der Anfrage aus der Objektzwischenspeicher-Steuereinheit betroffenen Zwischenspeicher-Zeile, wenn die durch den ersten Satz von Sicherheitsattributen definierten Zugriffsberechtigungen den durch den zweiten Satz von Sicherheitsattributen definierten Zugriffsberechtigungen entsprechen;
Senden einer Leseanforderung für Speicherobjektmetadaten an die Objektverwaltungseinheit, wenn das Abrufen eines oder beider des ersten und zweiten Satzes von Sicherheitsattributen aus der Zugriffsnachschlagetabelle der Objektspeicher-Firewall fehlschlägt, und die Leseanforderung für Speicherobjektmetadaten die Aufgabenobjektkennungen (TOID) und die Objektkennung (OID) beinhaltet.

13. Das Verfahren nach einem der Ansprüche 10 bis 12, weiter umfassend den Schritt zum:
Speichern eines oder mehrerer sicherer Schlüssel in einer Schlüsseltabelle des Rechenknotens;
Beinhalten einer Schlüsselreferenz auf einen der in der Schlüsseltabelle gespeicherten sicheren Schlüssel in einer Metadatenstruktur eines jeden Speicherobjekts;
Verschlüsseln und Entschlüsseln von Speicherobjektfragmenten, die zwischen dem Rechenknoten und dem verteilten Speicher ausgetauscht werden, unter Verwendung des sicheren Schlüssels aus der Schlüsseltabelle, auf die in der Metadatenstruktur des Speicherobjekts verwiesen wird.

## Revendications

1. Un nœud de calcul basé sur des objets pour un ordinateur multiprocesseur à plusieurs nœuds, comprenant:
au moins un cœur de calcul pour exécuter des tâches nécessitant des fragments d'un ou plusieurs objets mémoire comme entrées, chaque objet mémoire étant assigné à un identifiant d'objet (OID) et composé d'une pluralité de fragments accessibles sur un stockage distribué, et chaque tâche étant encapsulée dans un objet tâche en tant que type particulier d'objet mémoire et assignée à un identifiant d'objet tâche (TOID), dans lequel ledit au moins un cœur de calcul est configuré pour accéder aux fragments de chaque objet mémoire par des décalages dans un espace d'adressage logique contigu associé à l'objet mémoire ;
une unité de gestion d'objets pour mapper les adresses logiques des fragments d'objets mémoire aux adresses physiques des emplacements de stockage dans le stockage distribué, ledit stockage distribué étant une mémoire principale pour le nœud de calcul, l'unité de gestion d'objets étant configurée pour calculer l'adresse physique pour chaque fragment d'objet mémoire à partir d'une combinaison de l'identifiant d'objet correspondant (OID) et du décalage de fragment dans l'espace d'adressage logique associé à l'objet mémoire ;
un cache d'objets interposé entre ledit au moins un cœur de calcul et l'unité de gestion d'objets, le cache d'objets comprenant un contrôleur de cache d'objets, une pluralité de lignes de cache pour contenir les fragments d'objets mémoire à accéder par ledit au moins un cœur de calcul, et une mémoire de balises de cache pour stocker une première et une seconde balise d'identification pour chaque ligne de cache, ladite première balise d'identification représentant l'identifiant d'objet tâche (TOID) d'une tâche planifiée pour exécution sur ledit au moins un cœur de calcul et ladite seconde balise d'identification représentant l'identifiant d'objet (OID) de l'objet mémoire qui est une entrée pour ladite tâche planifiée pour exécution sur ledit au moins un cœur de calcul ;
dans lequel le contrôleur de cache d'objets est configuré pour vérifier une première correspondance entre l'identifiant d'objet tâche (TOID) d'une tâche en cours d'exécution sur ledit au moins un cœur de calcul et l'une desdites premières balises d'identification stockées dans la mémoire de balises de cache et une seconde correspondance entre l'identifiant d'objet (OID) d'un objet mémoire qui est une entrée pour ladite tâche en cours d'exécution sur ledit au moins un cœur de calcul et l'une desdites secondes balises d'identification stockées dans la mémoire de balises de cache, et permettre l'accès à l'une des lignes de cache à condition qu'une vérification des première et seconde correspondances ait été réussie pour cette ligne de cache.

2. Le nœud de calcul selon la revendication 1, comprenant en outre un pare-feu de stockage d'objets couplé de manière opérationnelle au cache d'objets et à l'unité de gestion d'objets,
dans lequel chaque ligne de cache du cache d'objets comprend des bits de contrôle d'accès par rapport à différents types d'accès aux objets mémoire et le contrôleur de cache d'objets est en outre configuré pour envoyer des requêtes pour des fragments d'objets mémoire au pare-feu de stockage d'objets, chaque requête incluant le décalage de fragment, l'identifiant d'objet tâche (TOID) et l'identifiant d'objet (OID) respectivement représentés par la première et la seconde balise d'identification stockées dans la mémoire de balises de cache par rapport à l'une des lignes de cache, et les bits de contrôle d'accès pour cette ligne de cache,
dans lequel le pare-feu de stockage d'objets est configuré pour :
déterminer le type d'accès inclus dans la requête du contrôleur de cache d'objets,
vérifier que le type d'accès est conforme à une valeur du bit de contrôle d'accès correspondant audit type d'accès et inclus dans la requête du contrôleur de cache d'objets,
générer un message d'erreur pour le contrôleur de cache d'objets si aucune conformité entre le type d'accès et la valeur du bit de contrôle d'accès n'est établie, ledit message d'erreur refusant l'accès à l'objet mémoire identifié par l'identifiant d'objet (OID) inclus dans la requête du contrôleur de cache d'objets par la tâche identifiée par l'identifiant d'objet tâche (TOID) inclus dans la requête du contrôleur de cache d'objets.

3. Le nœud de calcul selon la revendication 2, le pare-feu de stockage d'objets comprenant en outre une table de recherche d'accès pour stocker des identifiants d'objets (OID) en conjonction avec un premier ensemble d'attributs de sécurité associés à chaque identifiant d'objet (OID) et stocker des identifiants d'objets tâche (TOID) en conjonction avec un second ensemble d'attributs de sécurité associés à chaque identifiant d'objet tâche (TOID),
dans lequel chacun desdits premier et second ensembles d'attributs de sécurité définit des permissions d'accès pour au moins un groupe d'accès,
dans lequel chaque objet mémoire contient une portion de métadonnées stockant des permissions d'accès par rapport audit au moins un groupe d'accès,
dans lequel le pare-feu de stockage d'objets est configuré pour :
récupérer le premier et le second ensemble d'attributs de sécurité de la table de recherche d'accès, sur la base des identifiants d'objets tâche (TOID) et de l'identifiant d'objet (OID) inclus dans ladite requête du contrôleur de cache d'objets et, si une récupération est réussie, comparer les permissions d'accès définies par le premier ensemble d'attributs de sécurité aux permissions d'accès définies par le second ensemble d'attributs de sécurité,
mettre à jour les bits de contrôle d'accès de la ligne de cache ciblée par ladite requête si les permissions d'accès définies par le premier ensemble d'attributs de sécurité correspondent à la permission d'accès définie par le second ensemble d'attributs de sécurité, et
envoyer une requête de lecture pour les métadonnées d'objet mémoire à l'unité de gestion d'objets si la récupération de l'un ou des deux ensembles d'attributs de sécurité de la table de recherche d'accès est infructueuse, ladite requête de lecture pour les métadonnées d'objet mémoire incluant les identifiants d'objets tâche (TOID) et l'identifiant d'objet (OID).

4. Le nœud de calcul selon l'une quelconque des revendications 1 à 3, comprenant en outre un cache d'instructions pour contenir les instructions des objets tâche en attente d'exécution par ledit au moins un cœur de calcul, le cache d'instructions étant configuré pour assigner l'identifiant d'objet tâche (TOID) de chaque objet tâche en attente d'exécution par ledit au moins un cœur de calcul comme une balise d'identification aux instructions de l'objet tâche en attente d'exécution.

5. Le nœud de calcul selon l'une quelconque des revendications précédentes, comprenant en outre une unité de gestion de la sécurité pour chiffrer et déchiffrer les fragments d'objets mémoire échangés entre le nœud de calcul et le stockage distribué, en utilisant une clé sécurisée stockée dans une table de clés de l'unité de gestion de la sécurité, dans lequel la portion de métadonnées de chaque objet mémoire contient une référence de clé à l'une des clés sécurisées stockées dans la table de clés de l'unité de gestion de la sécurité et l'unité de gestion de la sécurité est configurée pour sélectionner une clé sécurisée de la table de clés, sur la base de la référence de clé contenue dans la portion de métadonnées des objets mémoire.

6. Le nœud de calcul selon la revendication 5, comprenant en outre une interface réseau pour connecter le nœud de calcul à un réseau informatique, le stockage distribué étant accessible au nœud de calcul via ledit réseau informatique, dans lequel l'unité de gestion de la sécurité est en outre configurée pour chiffrer et déchiffrer les messages envoyés sur le réseau informatique, en utilisant une clé de session à l'échelle du réseau.

7. Le nœud de calcul selon l'une quelconque des revendications précédentes, comprenant en outre une unité de stockage locale au nœud en tant que partie du stockage distribué, le reste du stockage distribué étant externe au nœud de calcul.

8. Le nœud de calcul selon l'une quelconque des revendications précédentes, comprenant en outre un soussystème de mémoire locale au nœud, le cache d'objets étant couplé de manière opérationnelle via le soussystème de mémoire locale au nœud au stockage distribué.

9. Un ordinateur en grappe comprenant une mémoire principale globale et une pluralité de nœuds de calcul selon l'une quelconque des revendications précédentes, ladite pluralité de nœuds de calcul étant connectée de manière opérationnelle les uns aux autres et à la mémoire principale globale via un réseau de communication, dans lequel la mémoire principale globale correspond au stockage distribué.

10. Un procédé de fonctionnement du nœud de calcul selon l'une quelconque des revendications 1 à 8, le procédé comprenant les étapes de :
planifier une pluralité de tâches pour exécution par ledit au moins un cœur de calcul, chaque tâche étant encapsulée dans un objet tâche en tant que type particulier d'objet mémoire et nécessitant des fragments d'un ou plusieurs objets mémoire comme entrées et chaque objet mémoire étant composé d'une pluralité de fragments accessibles sur un stockage distribué, dans lequel les emplacements de stockage dans le stockage distribué sont référencés par des adresses physiques, et ledit au moins un cœur de calcul est configuré pour accéder aux fragments de chaque objet mémoire par des décalages dans un espace d'adressage logique contigu associé à l'objet mémoire ;
assigner un identifiant d'objet tâche (TOID) unique à chaque tâche planifiée pour exécution et assigner un identifiant d'objet (OID) unique à chaque objet mémoire requis comme entrée pour l'une des tâches planifiées pour exécution ;
marquer les lignes de cache du cache d'objets avec des premières et secondes balises d'identification dans la mémoire de balises de cache du cache d'objets, obtenant ainsi des lignes de cache étiquetées, la première balise d'identification et la seconde balise d'identification pour chaque ligne de cache étiquetée représentant l'identifiant d'objet tâche (TOID) d'une tâche spécifique des tâches planifiées pour exécution et l'identifiant d'objet (OID) de l'un des objets mémoire qui est une entrée pour ladite tâche spécifique, respectivement ;
exécuter, sur ledit au moins un cœur de calcul, une tâche de ladite pluralité de tâches planifiées pour exécution ;
vérifier une première correspondance entre l'identifiant d'objet tâche (TOID) de la tâche en cours d'exécution sur ledit au moins un cœur de calcul et l'une desdites premières balises d'identification stockées dans la mémoire de balises de cache du cache d'objets ;
vérifier une seconde correspondance entre l'identifiant d'objet (OID) de l'objet mémoire qui est une entrée pour la tâche en cours d'exécution sur ledit au moins un cœur de calcul et l'une desdites secondes balises d'identification stockées dans la mémoire de balises de cache ;
accorder l'accès à une ligne de cache du cache d'objets à condition que les étapes de vérification des première et seconde correspondances aient été réussies pour cette ligne de cache.

11. Le procédé selon la revendication 10, comprenant en outre les étapes de :
stocker des bits de contrôle d'accès par rapport à différents types d'accès aux objets mémoire dans chaque ligne de cache du cache d'objets ;
envoyer des requêtes pour des fragments d'objets mémoire manquants à un pare-feu de stockage d'objets du nœud de calcul, chaque requête incluant le décalage de fragment, l'identifiant d'objet tâche (TOID) et l'identifiant d'objet (OID) respectivement représentés par la première et la seconde balise d'identification stockées dans la mémoire de balises de cache par rapport à la ligne de cache dans laquelle les objets mémoire sont manquants, et les bits de contrôle d'accès pour cette ligne de cache ;
dans lequel le pare-feu de stockage d'objets effectue les étapes de :
déterminer le type d'accès inclus dans la requête du contrôleur de cache d'objets ;
vérifier que le type d'accès est conforme à une valeur du bit de contrôle d'accès correspondant audit type d'accès et inclus dans la requête du contrôleur de cache d'objets ;
générer un message d'erreur si aucune conformité entre le type d'accès et la valeur du bit de contrôle d'accès n'est établie, ledit message d'erreur refusant l'accès à l'objet mémoire identifié par l'identifiant d'objet (OID) inclus dans la requête du contrôleur de cache d'objets par la tâche identifiée par l'identifiant d'objet tâche (TOID) inclus dans la requête du contrôleur de cache d'objets.

12. Le procédé selon la revendication 11, comprenant en outre les étapes de :
stocker des permissions d'accès par rapport à au moins un groupe d'accès dans une portion de métadonnées de chaque objet mémoire ;
stocker des identifiants d'objets (OID) en conjonction avec un premier ensemble d'attributs de sécurité associés à chaque identifiant d'objet (OID) dans une table de recherche d'accès du pare-feu de stockage d'objets et stocker des identifiants d'objets tâche (TOID) en conjonction avec un second ensemble d'attributs de sécurité associés à chaque identifiant d'objet tâche (TOID) dans la table de recherche d'accès du pare-feu de stockage d'objets, dans lequel chacun desdits premier et second ensembles d'attributs de sécurité définit des permissions d'accès pour au moins un groupe d'accès ;
récupérer le premier et le second ensemble d'attributs de sécurité de la table de recherche d'accès du pare-feu de stockage d'objets, sur la base des identifiants d'objets tâche (TOID) et de l'identifiant d'objet (OID) inclus dans ladite requête du contrôleur de cache d'objets et, si une récupération est réussie, comparer les permissions d'accès définies par le premier ensemble d'attributs de sécurité aux permissions d'accès définies par le second ensemble d'attributs de sécurité ;
mettre à jour les bits de contrôle d'accès de la ligne de cache ciblée par ladite requête du contrôleur de cache d'objets si les permissions d'accès définies par le premier ensemble d'attributs de sécurité correspondent à la permission d'accès définie par le second ensemble d'attributs de sécurité ;
envoyer une requête de lecture pour les métadonnées d'objet mémoire à l'unité de gestion d'objets si la récupération de l'un ou des deux ensembles d'attributs de sécurité de la table de recherche d'accès du pare-feu de stockage d'objets est infructueuse, ladite requête de lecture pour les métadonnées d'objet mémoire incluant les identifiants d'objets tâche (TOID) et l'identifiant d'objet (OID).

13. Le procédé selon l'une quelconque des revendications 10 à 12, comprenant en outre les étapes de:
stocker une ou plusieurs clés sécurisées dans une table de clés du nœud de calcul ;
inclure une référence de clé à l'une des clés sécurisées stockées dans la table de clés dans une structure de métadonnées de chaque objet mémoire ;
chiffrer et déchiffrer les fragments d'objets mémoire échangés entre le nœud de calcul et le stockage distribué, en utilisant la clé sécurisée de la table de clés référencée dans la structure de métadonnées de l'objet mémoire.
